(19) Europäisches Patentamt
European Patent Office
Office européen des brevets

(11) **EP 3 496 405 A1**

(12) **EUROPEAN PATENT APPLICATION**

(43) Date of publication:
**12.06.2019 Bulletin 2019/24**

(51) Int Cl.:
**H04N 19/39** *(2014.01)*      **H04N 19/85** *(2014.01)*

(21) Application number: **17306724.0**

(22) Date of filing: **08.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Institut Mines Telecom-Telecom Paristech
75014 Paris (FR)**

(72) Inventors:
• **PESQUET- POPESCU, Béatrice
77700 BAILLY ROMAINVILLIERS (FR)**
• **PURICA, Andrei
75013 PARIS (FR)**

(74) Representative: **Hnich-Gasri, Naïma et al
Marks & Clerk France
Immeuble Visium
22, avenue Aristide Briand
94117 Arcueil Cedex (FR)**

(54) **DEVICES AND METHODS FOR VIDEO RECONSTRUCTION FROM MULTIPLE SOURCE VIDEOS**

(57)    Embodiments of the invention provide a video reconstruction device (10) for determining one or more reconstructed videos in a video coding system, the video reconstruction device (10) being configured to receive two or more video streams, each video stream being associated with an input video, each input video representing a source video, each input video being encoded by a different video encoder, each video stream comprising data representative of the associated input video, wherein the video reconstruction device (10) comprises a processing unit (103) configured to optimize a video reconstruction function under at least one optimization constraint, which provides said one or more reconstructed videos, said video reconstruction function being dependent on a combination of said video streams, said at least one optimization constraint being dependent on one or more optimization parameters extracted from said video streams.

FIGURE 1

**Description**

**TECHNICAL FIELD**

The invention generally relates to video compression and in particular to video reconstruction from multiple descriptions of a single source video.

**BACKGROUND**

Multimedia content, especially video content, is dominating the consumer network traffic in all types of networks including computer networks, IP (Internet Protocol) networks, TV networks, and telephone networks. With the widespread high-speed internet and mobile wireless and optical fiber-based networks, several video applications have emerged with a growing demand for high-quality services. Examples of video applications comprise video streaming, video broadcasting, video on demand, video conferencing, High Definition TV, and Digital Video Broadcasting.

Uncompressed videos have extremely huge data rate and are not affordable for large scale distribution. To achieve high compression ratio, various video coding (also referred to as 'video compression') techniques were proposed to reduce the redundancies in the uncompressed video signals. In particular, several coding techniques have been standardized in a series of video coding standards. Examples of video coding standards comprise standards related to hybrid video coding such as the H.261, the MPEG-1 Video, the H.262/MPEG-2 Video, the H.263, the MPEG-4 Visual, the H.264/MPEG-4 AVC (AVC for Advanced Video Coding) also referred to as 'H.264/AVC', 'H.264', or 'AVC', the H.265/MPEG-H HEVC (HEVC for Hybrid Extended Video Coding), the SVC (SVC for Scalable Video Coding) standard which is the Annex G extension of the H.264 standard, the SHVC standard which is the scalable extension of the HEVC standard, and the Multi-View Coding (MCV) standard which is an amendment to the H.264 standard.

Existing standards enable interoperability among products from different manufacturers and provide flexibility in implementations allowing the standards to be applied to a wide variety of applications, on a wide variety of homogeneous and heterogeneous networks and systems, while reaching a wide variety of performances.

A video coding algorithm is required to deliver a good trade-off between visual quality and other coding performance measures, such as compression, coding complexity, scalability, robustness and security. In particular, error resilience and scalability are essential features to make video streams suitable for transmission through heterogeneous and unreliable networks while maintaining a high-quality of the videos.

Transmission and delivery of video content over heterogeneous networks towards heterogeneous clients/users face several challenges. Main challenges concern the coding complexity and the support of high-quality video services over a diverse range of clients/users capabilities and transmission channel capacities/qualities/conditions.

A major challenge related to video coding/decoding complexity concerns the limits of transmission bandwidth, processing power, and memory availability of networks. Video data, compared with other types of data (such as text, voice and image) transmitted over the networks, consumes most bandwidth. The performance of a video coding system is thus limited by the available processing power as well as by the available bandwidth. An efficient video coding system solution thus requires developing flexible coding methods for managing the computational complexity of the video coding/decoding process.

Further, the heterogeneity of the networks and/or the clients/users can drastically constraint the transmission/storage/delivery of video contents. Different types of networks can have varying bandwidth and/or different traffic loads. Different users/clients can use several types of equipments/terminals which can differ in their display resolutions and/or computational capabilities, imposing different video quality requirements. An efficient video coding system solution thus requires developing video coding techniques to efficiently and adaptively provide video services of a spatial, temporal, and quality fidelity that meets the requirements of the users.

Several video coding techniques have been proposed to improve such various video coding applications/services. Exemplary existing coding techniques comprise 'transcoding', 'simulcast', 'adaptive rate streaming', 'scalable video coding', and 'video reconstruction' techniques such as 'super-resolution' (SR) techniques.

'Transcoding', 'simulcast' and 'adaptive rate streaming' coding techniques can be used for example in applications requiring sharing a same source video in heterogeneous settings while adapting the video content to the variability of users/applications/requirements/network conditions.

A 'Transcoding' technique is based on decoding a video stream and re-encoding it with different encoding parameters. A down-sampling operation can be performed after decoding and before re-encoding the video stream for providing a lower resolution video stream. The transcoding of a video into several formats to make it suitable for different users/clients requires special processing of the video streams for each particular requirement, thereby introducing delay and computational complexity.

A 'Simulcasting' technique is based on separate encodings of video at different bit rates and possibly at different resolutions, frame rates, bit depths, or color gamut, which are simultaneously transmitted. Decoders can select which layer of a simulcast stream to request or decode. Separate encoding operations performed in simulcast to adapt the video content to user qualities require a computational complexity which increases as a function of the number of the generated video streams. However, such a technique may not be sufficient in the presence of a high number of users.

An 'Adaptive rate streaming' technique is based on the generation and storage of multiple copies of the video content (with different encoding parameters), but only one encoding is effectively transmitted to the receiver. Adaptive rate streaming relies on sufficiently enough storage resources for stocking the generated multiple copies of the video content. However, such storage resources are not available in some memory-limited devices/services/machines, such as for example in real-time applications.

'Scalable video coding' has been shown to be an efficient alternative to transcoding, simulcast and adaptive rate streaming in recent video coding standards. Scalable video coding is based on encoding multiple video streams containing multiple resolutions (temporal, quality, or spatial resolutions) into a single video stream. Parts of the encoded stream can be decoded on demand (for example separately by each different user). Decoding a part of the encoded video stream produces a video with a degraded quality and/or a smaller image size and/or a smaller rate.

Examples of video applications/services used by or provided to heterogeneous users over heterogeneous networks comprise surveillance and online video services such as video broadcasting, video streaming, and video conferences. Users can have different connection bandwidths, different screen sizes on their devices/equipments, and different demands or tolerances on video quality. In such applications, a same video source can be simultaneously sent to different users in different environments.

The scalability in SVC is achieved through layered video coding, where the video content is coded into multiple layers comprising a base layer (BL) and one or more enhancement layers (ELs). The base layer carries fundamental information that can only produce a limited video quality, while each of the enhancement layers carries refinement over the BL, providing enhanced video quality. The enhancement layers use inter-layer prediction techniques exploiting the correlation between the different information provided by the different layers.

There are three major types of scalabilities, which are not limited to, spatial, temporal and fidelity (also referred to as 'Signal-to-Noise Ratio') scalability supported and standardized for example in MPEG, and SHVC standards.

Scalable video coding was disclosed for example in:

- "J. M. Boyce, Y. Ye, J. Chen, and A. K. Ramasubramonian, Overview of SHVC: Scalable Extensions of the High Efficiency Video Coding standard, IEEE Transactions on Circuits and Systems for Video Technology, vol. 26, pages 20-34, 2015", and

- "Thomas Wiegand, G. Sullivan, J. Reichel, H. Schwarz, and M. Wien, Joint draft ITU-T rec. h 264 ISO/IEC 14496-10/amd. 3 scalable video coding, Joint Video Team (JVT) JVT-X201, 108:1990, 2007".

Scalable video coding gained interest in several applications that can benefit from the ability to adapt the encoded video streams to heterogeneous requirements of the decoders and variable conditions of the networks. Exemplary applications comprise video conferencing and video streaming over heterogeneous best effort wired and wireless networks. Scalable video coding enables each user/client to select an appropriate sub-set of the scalable video stream. Accordingly, using scalable video streams, a media-aware network element can reduce the video stream bandwidth by discarding the enhancement layers while forwarding lower layers to the decoder. A video decoder having limited computational complexity can select to decode lower resolution layers.

Scalable video coding can provide error resiliency and protection against loss of data. Unequal error protection can be used in combination with scalable video coding to provide greater amounts of protection to lower layers than the enhancement layers. Further, by providing an up-switching capability from a lower layer to a higher layer in the encoded stream, scalable video coding makes it possible for a video decoder to fully recover data from an earlier loss in the higher layer.

However, the base layer content requires stronger protection in order to benefit from scalability. Otherwise, losses in base layer still cause error propagation and make enhancement layers useless. Further, the complexity of SVC grows linearly as the number of layers increases.

Other video coding techniques based on video reconstruction exist including 'Super-Resolution' (SR) approaches. Video reconstruction for providing a reconstructed video having an enhanced resolution from single or multiple source videos can be required in numerous video applications such as video storage (e.g. DVD, cloud systems, video Large video databases such as YouTube or Netflix) and video distribution (e.g. in online streaming applications). In such applications, providing multiple resolutions and different encodings of a same original video can be required to match the requirements of each user imposed by transmission and storage qualities.

SR algorithms have been originally designed in the field of image processing as image reconstruction techniques used to infer a spatially high resolution image estimate from one or more low-resolution images. Existing approaches related to SR algorithms are disclosed for example in:

- "P. Milanfar, Super-Resolution Imaging, Digital Imaging and Computer Vision, Taylor&Francis/CRC Press, 2010", and
- "S. K. Nelson and A. Bhatti, Performance Evaluation of Multi-Frame Super-Resolution Algorithms, in International Conference on Digital Image Computing: Techniques and Applications (DICTA), Centre for Intelligent Systems Research, Deakin University, Geelong, Victoria, Australia, 2012".

SR algorithms comprise single-frame and multi-frame approaches. Multi-Frame approaches exploit the motion between successive low-resolution frames (images) for extracting unique information from each description corresponding to each frame.

Super-Resolution multi-frame approaches have been extended to the field of video processing as video reconstruction techniques used to reconstruct a video from different representations of a source video as disclosed in "C. Liu and D. Sun, On Baysian Adaptive Video Super Resolution, IEEE Transactions on Pattern Analysis and Machine Intelligence, vol. 36, no. 2, pages 346-360".

In SR multi-frame applied to video reconstruction, the processed different descriptions correspond to consecutive images of a single or multiple original video sequences. The problem of SR on compressed video has been studied in several works such as:

- "C. A. Segall, A. K. Katsaggelos, R. Molina, and J. Mateos, Super-Resolution From Compressed Video, Boston, MA: Springer US, ch. 11, pages 211-242, 2002";
- "B. K. Gunturk, Y. Altunbasak, and R. M. Mersereau, Super Resolution Reconstruction of Compressed Video Using Transform-domain statistics, IEEE Transactions on Image Processing, vol. 13, no. 1, pages 33-43, January 2004";
- "C. Wang, G. Yang, and Y.-P. Tan, Reconstructing Video From Multiple Compressed Videos, IEEE Transactions on Circuits and Systems For Video Technology, vol. 19, no. 9, pages 1342-1352, September 2009", and
- "A. Kappeler, S. Yoo, Q. Dai, and A.K. Katsaggelos, Super-Resolution of Compressed Videos Using Convolutional Neuroal Networks, in the proceedings of the IEEE International Conference on Image Processing, September 2016".

Existing resolution enhancement techniques from multiple descriptions of a single source video do not take into account the particularities of the different video streams and existing video reconstruction techniques including Super-Resolution approaches do not provide resolution enhancements.

There is accordingly a need for efficient low-complexity video coding techniques that provide adaptive generation of high resolution videos in any hybrid coding system from single or multiple video sequences encoded using any hybrid video encoder.

## SUMMARY

In order to address these and other problems, there is provided a video reconstruction device for determining one or more reconstructed videos in a video coding system, the video reconstruction device being configured to receive two or more video streams. Each video stream is associated with an input video, each input video representing a source video. Each input video is encoded by a different video encoder. Each video stream comprises data representative of the associated input video. The video reconstruction device comprises a processing unit configured to optimize a video reconstruction function under at least one optimization constraint, which provides the one or more reconstructed videos. The video reconstruction function is dependent on a combination of the video streams. The at least one optimization constraint is dependent on one or more optimization parameters extracted from the video streams.

According to some embodiments, each reconstructed video may comprise two or more reconstructed frames. In such embodiments, the processing unit may be configured to optimize the video reconstruction function by optimizing a frame reconstruction function associated with each reconstructed frame comprised in each reconstructed video, a frame reconstruction function associated with a reconstructed frame being optimized over frames selected from a given frame space domain under the at least one optimization constraint.

According to some embodiments, the video reconstruction device may be configured to update one of the at least one optimization constraint according to a performance criterion depending on one or more performance metrics chosen in a group comprising a bit rate, a video resolution, a video quality, and a signal-to-noise ratio prior to the determination of each reconstructed video.

According to some embodiments, the video reconstruction device may comprise a pre-processing unit configured to determine a frame stream from each video stream associated with an input video, an input video comprising two or more input frames, a frame stream being associated with an input frame comprised in an input video, the pre-processing unit being further configured to extract from each frame stream at least a vector of quantization coefficients and a transformed frame in association with each input frame comprised in each of the two or more input videos.

In some embodiments, the processing unit may be further configured to:

- determine a weighting coefficient in association with each input video;

- determine a distance function in association with each input frame, the distance function being determined by applying a predefined norm function over a given image domain space to a difference between the vector of quantization coefficients and the transformed frame associated with said input frame;

- determine a weighted distance function in association with each input frame by applying a multiplication operation to the weighting coefficient and the distance function associated with said input frame;

- determine a frame reconstruction function associated with each reconstructed frame by summing the weighted distance functions associated with input frames over the two or more input videos.

According to some embodiments, the processing unit may be configured to select at least one optimization constraint in a group comprising a quantization constraint, a pixel range constraint, and a total variation constraint, the processing unit being configured to extract the optimization parameters associated with each of said at least one optimization constraint from the video stream associated with each of the input videos.

According to some embodiments, the processing unit may be configured to select at least one optimization parameter in a group comprising frame reconstruction levels, quantization intervals, quantization levels, a first pixel value, a second pixel value, and a smoothness threshold, the processing unit being configured to extract the optimization parameters from the video stream associated with each of the input videos.

According to some embodiments, the processing unit may be configured to determine a smoothness threshold in association with a reconstructed frame depending on a frame reconstruction stopping criterion or from video databases.

There is also provided a scalable video encoder comprising the video reconstruction device according to any of the preceding features for determining one or more reconstructed videos, the scalable video encoder comprising two or more layers, each layer implementing a video encoder configured to receive an input video derived from a source video and to determine a video stream by encoding said input video. In such embodiments, the video reconstruction function may depend on a combination of the video streams determined by the two or more layers comprised in the scalable video encoder.

There is further provided a scalable video decoder comprising the video reconstruction device according to any of the preceding features for determining one or more reconstructed videos, the scalable video decoder comprising two or more layers, each layer implementing a video decoder configured to receive an input video stream derived from a scalable video stream representing multiple descriptions of a source video and to determine a decoded video by decoding said input video stream. In such embodiments, the video reconstruction function may depend on a combination of the decoded videos determined by the two or more layers comprised in the scalable video decoder.

According to some embodiments in application to scalable video encoders and/or scalable video decoders, the one or more of the reconstructed videos determined by the video reconstruction device may be used for inter-layer prediction.

According to some embodiments, there is provided a multi-view video encoder comprising the video reconstruction device according to any of the preceding features for determining one or more reconstructed videos, the multi-view encoder comprising two or more spatial views, each view implementing a video encoder configured to receive an input video representing a view of a video scene and to determine a video stream by encoding the received input video. In such embodiments, the video reconstruction function may depend on a combination of the video streams determined by said two or more spatial views.

According to some embodiments, there is provided a multi-view video decoder comprising the video reconstruction unit according to any of the preceding features for determining one or more reconstructed videos, the multi-view decoder comprising two or more spatial views, each spatial view implementing a video decoder configured to receive an input video stream derived from a multi-view stream representing a view of a video scene and to determine a decoded video by decoding said input video stream. In such embodiments, the video reconstruction function may depend on a combination of the decoded videos determined by said two or more spatial views.

According to some embodiments in application to multiview encoders and/or multitview decoders, the one or more reconstructed videos determined by the video reconstruction device may be used for inter-view prediction.

There is also provided a video reconstruction method for determining one or more reconstructed videos in a video coding system from two or more video streams, each video stream being associated with an input video, each input video representing a source video. Each input video is encoded by a different video encoder. Each video stream comprises data representative of the associated input video. The video reconstruction method comprises optimizing a video reconstruction function under at least one optimization constraint, which provides said one or more reconstructed videos, the video reconstruction function being dependent on a combination of said video streams, the at least one optimization constraint being dependent on one or more optimization parameters extracted from said video streams.

Advantageously, the video reconstruction methods and devices enable efficient video reconstruction while providing resolution and/or video quality and/or rate enhancements.

Advantageously, the video reconstruction methods and devices may be integrated with any transceiver device without requiring a modification on the hardware design.

**BRIEF DESCRIPTION OF FIGURES**

The accompanying drawings, which are incorporated in and constitute a part of this specification, illustrate various embodiments of the invention together with the general description of the invention given above, and the detailed description of the embodiments given below.

Figure 1 is a block diagram illustrating the structure of a video reconstruction device, according to some embodiments for video reconstruction from multiple representations of a source video;

Figure 2 is a block diagram illustrating an exemplary application of the video reconstruction device in a scalable video encoder, according to some embodiments of the invention;

Figure 3 is a block diagram illustrating an exemplary application of the video reconstruction device in a scalable video decoder, according to some embodiments of the invention;

Figure 4 is a block diagram illustrating an exemplary application of the video reconstruction in a multi-view video encoder, according to some embodiments of the invention;

Figure 5 is a block diagram illustrating an exemplary application of the video reconstruction device in a multi-view video decoder, according to some embodiments of the invention;

Figure 6 is a block diagram of an exemplary application of the invention to a video coding system implemented in a transmission system, according to some embodiments;

**DETAILED DESCRIPTION**

Embodiments of the present invention provide devices, methods, and computer program products for determining a reconstructed video in a video coding system, the reconstructed video being determined from two or more video streams associated with two or more input videos, the input videos representing multiple descriptions of a single source video. The video reconstruction devices and methods may be performed in the compressed domain exploiting a combination of the video streams representative of each of the input videos with the purpose of enhancing the resolution and the visual quality of the source video(s), the reconstructed video having an enhanced resolution and/or quality compared with the source video.

A video coding system (also referred to as a 'codec') consists of two parts: a video encoder and a video decoder, the video encoder being configured to transform a source video sequence (also referred to a 'source video') into an encoded video in the form of a compressed video stream, and the video decoder being configured to reconstruct the video content from the video stream.

An exemplary video coding system is the hybrid video coding system/scheme which has been from the H.261 standard the basic structure for all video coding standards and recommendations of ITU-T and ISO/IECMPEG. The video coding scheme is termed 'hybrid' as it combines temporal prediction between frames of the video sequence with transform coding techniques for the frame prediction errors. By prediction and transformation of the prediction signal, temporal, spatial, and statistical information redundancy may be removed from the source video.

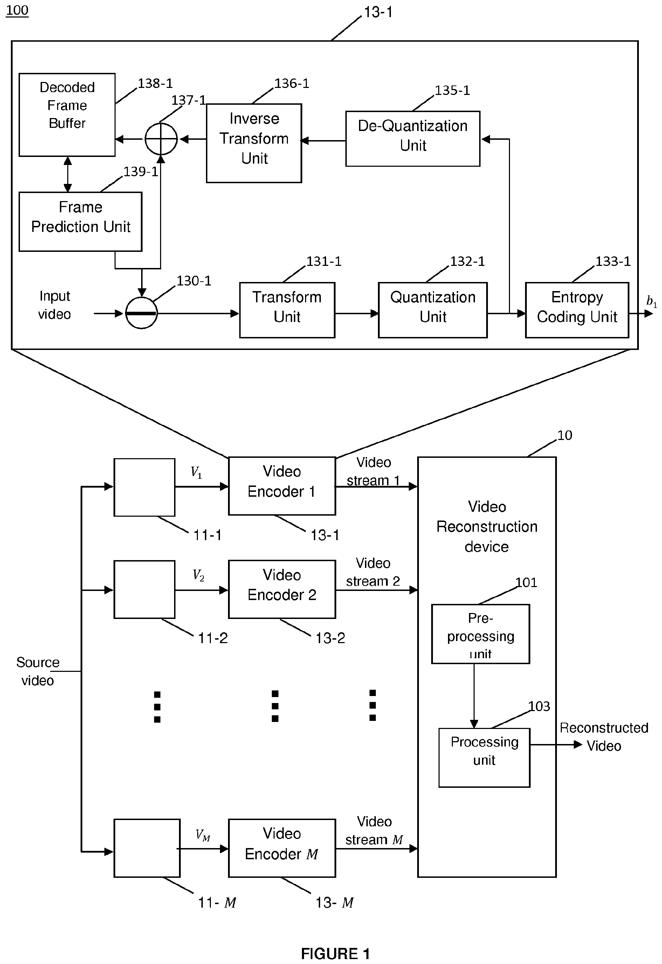

Figure 1 is a block diagram illustrating the structure of a video reconstruction device 10 (also referred to as 'video enhancement device') for determining one or more reconstructed videos (also referred to as 'enhanced videos') from $M \geq 2$ video streams associated with two or more input videos representing a source video in a video coding system. The two or more input videos may have been encoded by different video encoders 13-m with $m \in [1, M]$. The different video encoders 13-m for $m \in [1, M]$ may have different encoding configurations, e.g. different coding resolutions and/or different bit-rates. Each input video may comprise a sequence of one or more input frames. Each video stream associated with each input video may comprise data representative of the input video.

For ease of presentation, the following notations will be considered in the following:

- $\Omega$ denotes the image domain to which belong the input frames comprised in the input videos, the image domain $\Omega$ comprising a plurality of pixels. The number of pixels in a frame refers to the resolution of the image.

- $M \geq 2$ denotes the number of input videos;

- $\overline{V}$ denotes the source video;

- $\overline{x}_{i,m}$ denotes the $i^{th}$ input frame comprised in input video $\overline{V}$;

- an input video is indexed by the index $m$, with $m \in [1, M]$ and denoted by $V_m$;

- variables expressed using the index m refer to the $m^{th}$ input video;

- $b_m$ denotes the video stream associated with the $m^{th}$ input video $V_m$;

- an input frame is indexed by the index $i \in [1, K]$ such that the $i^{th}$ input frame comprised in the $m^{th}$ input video is denoted by $x_{m,i}$;

- variables expressed using the index $i$ refer to the $i^{th}$ input frame;

- $b_{m,i}$ denotes the frame stream associated with the $i^{th}$ input frame $x_{m,i}$ comprised in the $m^{th}$ input video $V_m$;

- $\hat{x}_i$ denotes the $i^{th}$ reconstructed frame of a reconstructed video $V$;

- $\tilde{x}_{m,i}$ denotes the $i^{th}$ predicted frame of the $i^{th}$ input frame $\overline{x}_{i,m}$ comprised in the $m^{th}$ input video $V_m$;

- $z_{m,i}$ denotes a vector of quantization coefficients associated with the $i^{th}$ input frame $\overline{x}_{m,i}$ *comprised* in the $m^{th}$ input video $V_m$;

- $\overline{y}_{m,i}$ denotes a transformed frame associated with the $i^{th}$ input frame $\overline{x}_{m,i}$ comprised in the $m^{th}$ input video $V_m$;

- $J_{DF}(\hat{x}_i)$ denotes a frame reconstruction function associated with the $i^{th}$ reconstructed frame of a reconstructed video;

The source video (generally any video sequence) consists of a series of pictures (also referred to as 'frames' or 'images') which are presented with constant or variable time intervals between successive pictures. In order to achieve the impression of motion, a picture rate of at least about 24 pictures per second may be required.

The source video may originate from a variety of sources including for example the capture of natural scenes, scanning of photographed film material, analogue recording of video, or synthetically generated video material like computer generated animation. Furthermore, the source video may originate from mixtures and/or combinations of the above mentioned sources.

The properties and quality of the source video may depend on the origin of the video data and/or on the video acquisition conditions (for example the camera properties). The video signal may reveal different characteristic properties concerning the represented scene content as well as the presence of other signal components which interfere with the video content, such as camera noise, film grain, motion blur, or artifacts from digitized analogue or physical source material.

Depending on video acquisition/generation conditions, the source video data may have various degradations and show undesirable artifacts, which should be removed.

Accordingly, the source video may be pre-processed by two or more pre-processors 11-$m$ for $m = 1, ..., M$ before being encoded by each video encoder 13-$m$, a pre-processor 11-$m$ being configured to determine an input video $V_m$ by performing pre-processing operations on the uncompressed video source material of the source video.

The input videos $V_m$ may have different properties such as different resolutions and/or different rates. Each input video $V_m$ may comprise a sequence of input frames $\{\overline{x}_{m,1}, \overline{x}_{m,2}, ..., \overline{x}_{m,K}\}$, $K$ denoting the size of the input frames sequence. Each input frame $\overline{x}_{m,i}$ belongs to the image domain space $\overline{x}_{m,i} \in \Omega$.

According to some embodiments, the image domain space $\Omega$ may be a real Hilbert space.

Each pre-processor 11-$m$ may be configured to perform pre-processing operations for enhancing the video signal in preparation to the encoding process and/or for adapting the video signal to the specifications/requirements of the underlying application (for example adapting the rate, the resolution, the color format) such that the source video can support the video encoder 11-$m$ for an improved compression efficiency.

Each pre-processor 11-$m$ may be configured to perform pre-processing operations such as trimming, rate conversion, geometrical format conversion, color format conversion, color correction, de-noising filtering, and low-pass filtering. Each pre-processor 11-$m$ may be further configured to perform an sub-sampling operation to the source video.

The video acquisition process may be temporally and/or physically decoupled from the pre-processing operations and the encoding applied to the source video.

Each input video $V_m$ may be then fed into each of the two or more video encoders 13-$m$ for $m$ = 1, ..., $M$, the video encoder 13-$m$ being configured to determine a video stream $b_m$ by encoding the received input video $V_m$. Each video encoder 13-$m$ for $m$ = 1, ..., $M$ may accordingly transform the input video $V_m$ into a coded compact representation of a bit-stream suitable for the transmission/storage/processing method in the underlying application. Each video stream $b_m$ may contain a binary representation of all information and data necessary to decode the video stream and reconstruct the input video.

Each encoded video stream $b_m$ may have a packet-oriented structure where the encoded information is hierarchically organized and encapsulated into a transport format according to the underlying application requirements.

The processing operations, in particular motion estimation and prediction, performed during the encoding process may be block-based according to a partitioning/segmentation of the input videos into multiple non-overlapping blocks referred to as 'macro blocks' (MB). The macro-blocks may be processed during the encoding process one after the other.

Accordingly, a video encoder 13-$m$ for $m \in [1, M]$ may be configured to select block sizes and to partition the input video $V_m$ into a set of non-overlapping macro-blocks according to the selected block sizes.

In some embodiments for example in the video coding system standardized in the H.264 standard, a macro-block may be a square sub-frame containing 16x16 pixels.

In some embodiments, a video encoder 13-$m$ for $m \in [1, M]$ may be configured to select the block sizes according to a tradeoff between compression efficiency and computation complexity. Large block sizes may be advantageously selected to maintain a low block-to-block correlation resulting in less spatial compression. Small block sizes may be advantageously selected for low computational complexity and/or more accurate motion estimation, especially in areas with complex video content.

According to some embodiments, a video encoder 13-$m$ for $m \in [1, M]$ may be configured to encode the input video $V_m$ according to a predictive coding scheme or a non-predictive scheme.

The input frames comprised in the input videos may have high temporal and spatial correlations. Using a predictive coding scheme, the temporal and spatial correlations between the input frames may be exploited to compress the input video to the most compact bit-streams. Accordingly, for each input frame comprised in the input videos, other than encode it directly, a current input frame may be predicted from one or more reference frames, and the prediction signal may be coded.

Using a non-predictive coding scheme, each macro-block of each input frame extracted from an input video may be encoded without taking into account the possible temporal and/or spatial correlation between said each block and the remaining macro-blocks of the same frame or of the previously decoded frames.

According to some embodiments using predictive coding, a video encoder 13-$m$ for $m \in [1, M]$ may comprise a frame prediction unit 139-$m$ configured to perform frame prediction for determining a predicted frame $\tilde{x}_{m,i}$ in association with each input frame $\overline{x}_i$ comprised in input video $\overline{V}$.

According to some embodiments, a frame prediction unit 139-$m$ may be configured to perform frame prediction in macro-blocks basis by determining a prediction on the macro blocks one after one.

In other embodiments, a frame prediction unit 139-$m$ may be configured to segment each macro-block into smaller blocks termed 'prediction blocks' and to perform prediction in a prediction-block basis. In such embodiments, the frame prediction unit 139-$m$ may be further configured to select or determine sizes of the prediction blocks and to partition each macro-block into prediction blocks according to said sizes of the prediction blocks.

A frame prediction unit 139-$m$ comprised in a video encoder 13-$m$ for $m \in [1, M]$ may be configured to apply one or more prediction modes selected in a group comprising 'intra-prediction' and 'inter-prediction'.

In some embodiments, a frame prediction unit 139-$m$ may comprise an intra-prediction unit and an inter-prediction unit physically independent (both not illustrated in figure 1), the intra-prediction unit being configured to perform intra-prediction if the intra-prediction mode is selected and the inter-prediction unit being configured to perform inter-prediction if the inter-prediction mode is selected.

According to some embodiments, a frame prediction unit 139-$m$ comprised in a video encoder 13-$m$ may be configured to apply intra-prediction for reducing the spatial redundancy within a same frame by removing the correlation between local blocks/regions of the same frame.

Using intra-prediction, a frame prediction unit 139-$m$ comprised in a video encoder 13-m may be configured to predict a current macro-block or a current prediction block from already reconstructed spatial neighboring blocks of said current macro-block or prediction block, if available. A basic assumption for intra-prediction is that texture of a frame region is similar to the texture in the local neighborhood and can thus be predicted from there.

The quality and the frequency of application of intra -prediction may depend on various criteria comprising the available intra prediction directions, the method of pre-filtering the prediction samples before application, and the availability of other prediction methods that are not directional (e.g. planar prediction).

According to some embodiments, a frame prediction unit 139-*m* comprised in a video encoder 13-*m* may be configured to apply inter-prediction to exploit the temporal correlation between the different frames of the source video.

Using inter-frame prediction, a frame prediction unit 139-*m* comprised in a video encoder 13-*m* may be configured to predict a current input frame using one or more of the previously decoded frames, if available. The frame prediction unit 139-*m* may be configured to select one or more available reference frames (for example from a decoded frame 138-*m*) and to determine a displacement relative to the location of the current source frame in the selected one or more reference frames. A basic assumption for inter-prediction is that a significant part of the content of the source frames in the source video consists of objects which move in the video scene. From frame to frame, only small differences between the video scene content are observed and these differences are mostly due to motion. When using this motion for a current frame prediction, the video scene can be efficiently represented by motion vectors and a prediction error signal. The motion vectors indicate how frame regions should be moved from the reference frame to the current frame to form the prediction.

According to some embodiments in application for example to the H.264 standard, frame prediction may be performed from multiple frame references.

In some embodiments, a frame prediction unit 139-m comprised in a video encoder 13-m may be configured to select/determine the number of the reference frames to be used for frame prediction depending on the available computational resources. Advantageously, one reference frame may be considered when targeting low-complexity encoding.

Similarly to intra-prediction, a frame prediction unit 139-*m* comprised in a video encoder 13-*m* may be configured to apply inter-prediction on a macro-blocks basis or on a prediction-blocks basis, the prediction blocks being determined by the frame prediction unit 139-*m* by partitioning each macro-block into multiple prediction blocks. Accordingly, the frame prediction unit 139-*m* may be configured to determine a best-matching block in the selected one or more reference frames, and uses it as the prediction for the current block (macro-block or prediction block).

According to some embodiments, the selection of the prediction mode to be applied by each frame prediction unit 139-*m* comprised in each video encoder 13-*m* for $m = 1, ... , M$ may be performed by a control unit (not shown in figure 1) comprised in the video encoder 13-m.

According to some embodiments, a control unit may be configured to select the intra-prediction for example when no reference frames for inter-prediction are available (for example when predicting the first frame of the source video), or if inter-prediction would be less efficient or more expensive (in the sense of an applicable cost criterion) than an applicable inter-prediction.

In some embodiments, the control unit may be configured to select a prediction mode according to a mode prediction criterion such as rate-distortion optimization.

According to some embodiments, the video encoders 13-*m* for $m = 1, ..., M$ may be configured to apply a same frame prediction mode using different prediction parameters, prediction parameters comprising for example the selected prediction mode, the sizes of the prediction blocks, and the intra-prediction directions if applicable.

In other embodiments, at least two of the video encoders 13-*m* for $m \in [1, M]$ may be configured to apply different frame prediction modes.

A frame prediction unit 139-*m* comprised in a video encoder 13-*m* for $m \in [1, M]$ may be configured to send the determined predicted frames $\tilde{x}_{m,i} \in \Omega$ to a first calculation unit 130-*m* and to a second calculation unit 137-*m*.

According to some embodiments, the first calculation unit 130-*m* may be configured to determine a prediction error signal (also referred to as 'residual signal' or 'residual error signal') from each predicted frame $\tilde{x}_{m,i} \in \Omega$ in the form of a residual frame. The first calculation unit 130-*m* may be configured to determine the residual signal by applying a subtraction operation to subtract the predicted signal from the input video $V_m$. More specifically, the first calculation unit 130-*m* may be configured to determine the residual frame $\overline{x}_{m,i} - \tilde{x}_{m,i}$ associated with each input frame $\overline{x}_{m,i}$ by subtracting the predicted frame $\tilde{x}_{m,i}$ from the input frame $\overline{x}_{m,i}$. The prediction signal may contain the part of the input video $V_m$ which could not be predicted by the selected prediction mode.

The first calculation unit 130-*m* may be configured to determine each prediction error signal on a macro-block basis, by processing the macro-blocks of each source frame one-by-one.

A first calculation unit 130-*m* comprised in a video encoder 13-*m* for $m \in [1, M]$ may be configured to send the determined residual signal associated with the input frames to a transform unit 131-*m* comprised in the video encoder 13-*m*, the transform unit 131-*m* being configured to determine a transformed frame $\overline{y}_{m,i}$ in association with each input frame $\overline{x}_i$ by applying a transform coding operation denoted by $t_m(.)$ to the residual frame $\overline{x}_{m,i} - \tilde{x}_{m,i}$ such that for each input frame $\overline{x}_{m,i}$, the transformed frame $\overline{y}_{m,i}$ associated with said input frame is given by:

$$\bar{y}_{m,i} = t_m\big(\bar{x}_{m,i} - \tilde{x}_{m,i}\big) \tag{1}$$

It should be noted that the transformed frame determined according to equation (1) corresponds to a predictive coding scheme. Using a non-predictive coding scheme, no predicted frames are available; the transform coding operation may be thus applied to the input frames. Thus equation (1) may be reduced to:

$$\bar{y}_{m,i} = t_m\big(\bar{x}_{m,i}\big) \tag{2}$$

The components of the vector $\bar{y}_{m,i}$ representing the transformed frame are referred to as transformed coefficients.

A transform unit 131-*m* comprised in the video encoder 13-*m* may be configured to apply a transform coding operation for removing the spatial correlation between pixels within each macro-block of the residual signal. The goal of transform coding is to eliminate the low energy components in the residual signal that are not sensitive to human eyes and represent the correlated parts of the residual signal by a small number of transform coefficients.

Further, according to some embodiments, a transform unit 131-*m* comprised in the video encoder 13-*m* may be configured to apply transform coding on macro-block basis.

In other embodiments, the transform unit 211 may be configured to apply transform coding to sub-blocks of macro-blocks also referred to as 'transform blocks'. In such embodiments, the transform unit 211 may be configured to select or determine sizes of the transform blocks and to partition each macro-block into transform blocks according to said sizes of the transform blocks.

In some embodiments, a transform unit transform unit 131-*m* comprised in a video encoder 13-*m* may be configured to apply a transform coding operation selected in a group comprising a discrete cosine transform (DCT), an integer discrete cosine transform, a discrete sine transform (DST), the Hadamard transform, the wavelet transform. The DCT may be advantageously selected given its high efficiency and low-complexity.

A transform coding operation may be specified in floating point operations such as the DCT or in integer-value operations such as the integer DCT.

Transform coding operations are linear functions which can be represented in a matrix notation by a transform matrix denoted by $T_m$. In particular, the entries of a transform matrix representing an integer transform coding operation are integer numbers and the matrices representing floating point transform functions are unitary.

By applying a transform coding operation $t_m$ to a macro-block (or to a transform block) denoted by a *NxN* matrix $B_{m,i}$, a transform unit 131-*m* comprised in the video encoder 13-*m* may be configured to determine the transformed macro-block in a matrix representation *C* according to:

$$\bar{y}_{m,i} = T_m \cdot B_{m,i} \cdot T_m^t \tag{3}$$

According to some embodiments, the transform units 131-*m* comprised in the video encoders 13-*m* may apply a same transform coding operation using different transform parameters.

In other embodiments, at least two of the transform units 131-*m* comprised in the video encoders 13-*m* may apply different transform coding operations.

A transform unit 131-*m* comprised in a video encoder 13-*m* may be configured to send a transformed frame $\bar{y}_{m,i}$ to a quantization unit 132-*m* comprised in the video encoder 13-*m*. The quantization unit 132-*m* may be configured to determine a vector of quantized coefficients (also referred to as 'syntax elements') in association with each input frame $\bar{x}_{m,i}$ by applying a quantization operation denoted by $Q_m$ to the transformed frame $\bar{y}_{m,i}$ associated with said input frame according to:

$$z_{m,i} = Q_m\big(\bar{y}_{m,i}\big) \tag{4}$$

A quantization operation $Q_m$ may consist of mapping the amplitudes of the transformed signal (transformed frames) to a predefined set of quantization values.

A quantization operation may be associated with a set of quantization parameters comprising a quantization interval, a quantization step size. A quantization unit 132-*m* comprised in the video encoder 13-*m* may be further configured to select/determine the set of quantization parameters applicable for the quantization operation. The values of the quantization parameters may be selected according to a tradeoff between granularity and the quantization complexity.

In some embodiments, a quantization unit 132-*m* comprised in the video encoder 13-*m* may be configured to select/determine the set of quantization parameters according to a quantization criterion aiming to balance between the coding granularity and the coding cost.

A quantization unit 132-$m$ comprised in the video encoder 13-$m$ may be configured to apply a quantization operation $Q_m$ selected in a group comprising scalar quantization operations and vector quantization operations.

Using a scalar quantization operation, a quantization unit 132-$m$ comprised in the video encoder 13-$m$ may apply the quantization operation to the transformed coefficients individually. Advantageously, scalar quantization may require low-computational complexity than vector quantization.

Using a vector quantization operation, a quantization unit 132-$m$ comprised in the video encoder 13-$m$ may apply the quantization operation to the transformed coefficients simultaneously. Advantageously, vector quantization may bring higher compression gains than scalar quantization.

The transformation and quantization operations may be performed in a loop until processing all the source frames of the source video.

A quantization unit 132-$m$ comprised in the video encoder 13-$m$ with $m \in [1, M]$ may be configured to send the vectors of quantized coefficients $z_{m,i}$ associated with all the input frames $\bar{x}_{m,i} \in \Omega$ to an entropy coding unit 133-$m$ comprised in the video encoder 13-$m$. Each entropy coding unit 133-$m$ comprised in each video encoder 13-$m$ for $m = 1, ..., M$ may be configured to determine a video stream $b_m$ representative of the input video $V_m$ by applying an entropy coding scheme at least to the received syntax elements. The entropy coding scheme may advantageously allow removing the statistical redundancy remaining in the video data represented by the quantization vectors.

In addition to the syntax elements, other parameters used in the encoder configuration and/or used during the encoding process may be required for decoding the video stream (at the decoder of the video codec). For example, prediction parameters may be needed to reproduce the prediction signal at the decoder.

Accordingly, in some embodiments, an entropy coding unit 133-$m$ comprised in a video encoder 13-$m$ for $m = \in [1, M]$ may be configured to determine the video stream $b_m$ by applying an entropy coding scheme to at least some of the transform coefficients, the syntax elements, the motion vectors, synchronization information, and one or more prediction parameters.

Exemplary entropy coding schemes may comprise Huffman coding and arithmetic coding.

The transform unit 131-$m$, the quantization unit 132-$m$, and the entropy coding unit 133-m represent the building units of any video encoder, in particular a hybrid video encoder implementing a non-predictive coding scheme.

In embodiments in which a video encoder 13-$m$ is a hybrid video encoder implementing predictive coding, the reconstruction of the transformed and quantized prediction signal may be required to construct the prediction signal. Accordingly, a hybrid video encoder 13-$m$ may further comprise some of the processing units of a video decoder required to perform the inverse operations of the quantization and transform operations.

Referring to figure 1, a video encoder 13-$m$ may comprise a de-quantization unit 135-$m$ and an inverse transform unit 136-$m$ configured to reconstruct the prediction signal, the de-quantization unit 215 being configured to receive the quantized coefficients from the quantization unit 132-$m$ and to perform a de-quantization operation to said quantized coefficients, and the inverse transform unit 136-$m$ being configured to apply the inverse of the transform operation applied by the transform unit 131-$m$ for determining a reconstructed prediction error.

A video encoder 13-$m$ may comprise a second calculation unit 137-$m$ configured to add the reconstructed prediction error with the available prediction signal determined and sent by the frame prediction unit 139-$m$.

A second calculation unit 137-1 comprised in a video encoder 13-$m$ for $m \in [1, M]$ may be configured to send the reconstructed prediction error to a decoded frame buffer 138-$m$ comprised in the video encoder 13-$m$, the decoded frame buffer 138-$m$ being configured to store the decoded frames to make them available for further use (e.g. for display or for prediction).

In some embodiments, one or more of the decoded frames stored in a decoded frame buffer 138-1 comprised in a video encoder 13-$m$ for $m \in [1, M]$ may be used in the frame prediction, for example one or more stored decoded frames may be selected as reference frames for inter-prediction. In such embodiments, the frame prediction unit 139-$m$ may be configured to load one or more selected frame references from the decoded frame buffer 138-$m$.

In some embodiments, one or more of the decoded frames stored in a decoded frame buffer 138-$m$ comprised in a video encoder 13-$m$ for $m \in [1, M]$ may be used for display. In such embodiments, the decoded frame buffer 138-$m$ may be configured to store one or more of the decoded frames until they are scheduled for display, the one or more of the decoded frames required to be available for display according to the timing constraints.

According to some embodiments, the decoded frames may undergo in-loop filtering performed by an in-loop filter (not shown in figure 1) before being stored in a decoded frame buffer 138-$m$. The in-loop filter may be used to improve the quality of the decoded frames made available for prediction or for display, thereby impacting the overall performance of a video encoder 13-$m$.

In some embodiments, the in-loop filter may be configured to select a filtering operation among a group of filters comprising linear filters and local spatial domain filters.

The filter configuration may be flexible or static over the video sequence. For example, different filtering parameters may be used for one or more of the source frames of the source video.

In some embodiments, the in-loop filter may be configured to select a filtering operation and/or to select the parameters of the filtering operation according to one or more filtering optimization criteria which may depend on the visual quality or on objective fidelity measures such as the minimization of the mean squared error between the source frames and the decoded pictures.

In some embodiments, the in-loop filtering may be activated on a macro-block basis.

According to some embodiments, the in-loop filters used in each of the video encoders 13-$m$ may be configured to apply the same filtering operation using different filtering parameters.

In other embodiments, at least two of the in-loop filters used in at least two of the video encoders 13-$m$ may be configured to apply different filtering operations.

Further, a video encoder 13-m may comprise a control unit (not shown in figure 1) configured to perform one or more encoder control actions chosen in a group of control actions comprising the decoded frame buffer management, decision on the applicable prediction modes, selection of prediction parameters, selection of in-loop filtering parameters, selection of applicable quantization parameters, selection of sizes of macro-blocks, selection of the applicable transform operations, regulation of the amount of bits in the encoded bit-stream.

The regulation of the amount of bits in the encoded bit-stream is a fundamental control action for ensuring that the decoder buffer does neither overfill nor run empty.

In some embodiments, some of the control actions may be performed in a distributed way by each corresponding processing unit (for example the selection of the applicable quantization parameters may be performed by a quantization unit 132-m).

In other embodiments, the control actions may be performed in a centralized way by the control unit, the control unit being in this case configured to communicate each parameter to the corresponding processing unit which requires said parameter during the encoding process (for example send the selected prediction mode and the selected prediction parameters to the frame prediction unit 139-$m$).

It should be noted that in embodiments in which a non-predictive coding scheme is used, a video encoder 13-$m$ may comprise only the building units of a video encoder, namely a transform unit 131-$m$, a quantization unit 132-$m$ and an entropy coding unit 133-$m$. In such embodiments, the input video $V_m$ may be directly processed by said building units for determining the video stream $V_m$. A hybrid coding encoder may be configured to switch between a predictive coding scheme and the non-predictive coding scheme by activating/deactivating the units required for the prediction operations.

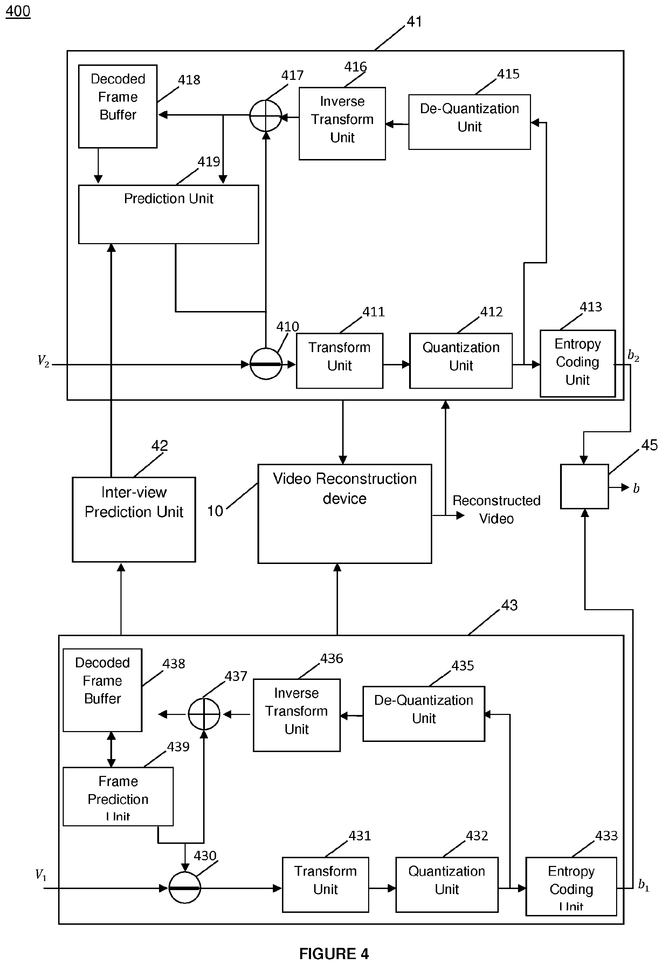

Referring to figure 4, the video reconstruction device 10 may comprise a processing unit 103 configured to determine one or more reconstructed videos $V$ according to the optimization of a video reconstruction function denoted by $J_{DF}(V)$ in the presence of at least one optimization constraint, the video reconstruction function $J_{DF}(V)$ being dependent on a combination of the video streams $b_m$, for $m = 1, ..., M$, associated with the two or more input videos $V_m$, the at least one optimization constraint being dependent on one or more optimization parameters related to the two or more input videos $V_m$ and being extracted from the video streams $b_m$ associated with the two or more input videos $V_m$ for $m = 1, ..., M$.

According to some embodiments, the video reconstruction device 10 may be configured to determine each of the one or more reconstructed videos by determining a sequence $\{\hat{x}_1, \hat{x}_2, ..., \hat{x}_K\}$ of a predefined number $K \geq 2$ of reconstructed frames $\hat{x}_i \in \Omega$ for $i = 1, ..., K$ in association with each reconstructed video $V$, according to which a reconstructed video $V$ comprises a predefined number $K$ of reconstructed frames $\hat{x}_i \in \Omega$ for $i = 1, ..., K$.

More specifically, the processing unit 103 may be configured to determine a reconstructed frame $\hat{x}_i$ comprised in a reconstructed video $V$ according to the optimization of a frame reconstruction function $J_{DF}(\hat{x}_i)$ associated with the reconstructed frame $\hat{x}_i$ over frames $x_i$ selected from a given frame space domain $\Omega$ in the presence of at least one optimization constraint $Opt_{l,l=1,...,L}$ dependent on one or more optimization parameters according to the optimization problem expressed by:

$$\hat{x}_i = \mathrm{argmin}_{x_i \in \Omega / x_i \ satisfies \ Opt_{l,l=1,...,L}} J_{DF}(\hat{x}_i) \tag{5}$$

In equation (5), $L$ denotes the number of the optimization constraints considered for the optimization of a frame reconstruction function $J_{DF}(\hat{x}_i)$.

According to some embodiments, the video reconstruction function $J_{DF}(V)$ may be expressed as a function of the frame reconstruction functions $J_{DF}(\hat{x}_i)$ associated with all the reconstructed frames that belong to the image domain space according to:

$$J_{DF}(V) = \sum_{x_i \in \Omega, i=1,...,K} J_{DF}(\hat{x}_i) \tag{6}$$

Accordingly, the optimization of the video reconstruction function may be expressed using the optimization of the frame reconstruction functions according to:

$$\hat{V} = \mathrm{argmin}_{x_i \in \Omega / x_i \; satisfies \; Opt_{l,l=1,\dots,L}} \sum\nolimits_{x_i \in \Omega, i=1,\dots,K} J_{DF}(\hat{x}_i) \qquad (7)$$

The processing unit 103 may be configured to determine a reconstructed video by determining reconstructed frames independently, thus solving equation (7) may be reduced to solving equation (5) for determining each reconstructed frame $\hat{x}_i$ comprised in the sequence of reconstructed frames in association with a reconstructed video. This means that the optimization problem in equation (7) associated with a reconstructed video $V$ may be solved by solving in parallel and independently $K$ optimization problems of equation (5) in association with each reconstructed frame $\hat{x}_i$ for $i = 1, \dots, K$, thereby enabling a parallelization of the video reconstruction process.

According to some embodiments, the video reconstruction device 10 may be configured to determine different reconstructed videos by varying at least one of the optimization constraints $Opt_l$ according to a performance criterion depending on one or more performance metrics chosen in a group comprising a bit rate, a video resolution, a video quality, and a signal-to-noise ratio. In such embodiments, by varying at least one optimization constraint $Opt_l$ in the optimization problem expressed in equation (5) or (7), the video reconstruction device 10 may be configured to determine a different reconstructed video having different resolution and/or different bit-rate and/or different quality.

In order to process the input videos frame-by-frame, the video reconstruction device 10 may further comprise a pre-processing unit 101 configured to determine/extract a frame stream $b_{m,i}$ from each video stream $b_m$ associated with each of the two or more input videos $V_m$ with $m \in [1, M]$, the frame stream $b_{m,i}$ being associated with the $i^{th}$ input frame $\overline{x}_{m,i}$ comprised in the $m^{th}$ input video $V_m$. The pre-processing unit 101 may be further configured to extract from each frame stream $b_{m,i}$ at least a vector of quantization coefficients $z_{m,i}$ and a transformed frame $\overline{y}_{m,i}$ in association with each input frame $\tilde{x}_{m,i}$ comprised in each of said two or more input videos $V_m$ with $m \in [1, M]$. In such embodiments, the processing unit 103 may be configured to:

- determine a weighting coefficient $\alpha_m$ in association with each input video $V_m$ with $m \in [1, M]$;

- determine a distance function $\varphi_m(\overline{y}_{m,i} - z_{m,i})$ in association with each input frame $\overline{x}_{m,i}$, the distance function $\varphi_m(\overline{y}_{m,i} - z_{m,i})$ being determined by applying a predefined norm function $\varphi_m$ over a given image domain space $\Omega$ to a difference $\overline{y}_{m,i} - z_{m,i}$ between the vector of quantization coefficients $z_{m,i}$ and the transformed frame $\overline{y}_{m,i}$ associated with the input frame $\overline{x}_{m,i}$;

- determine a weighted distance function $\alpha_m \varphi_m(\overline{y}_{m,i} - z_{m,i})$ in association with each input frame $\overline{x}_{m,i}$ by applying a multiplication operation to the weighting coefficient $\alpha_m$ and the distance function $\varphi_m(\overline{y}_{m,i} - z_{m,i})$ associated with the input frame $\overline{x}_{m,i}$;

- determine the frame reconstruction function $J_{DF}(\hat{x}_i)$ associated with each reconstructed frame $\hat{x}_i$ by summing the weighted distance functions $\alpha_m \varphi_m(t_{m,i} - z_{m,i})$ associated with input frames $x_{m,i}$ comprised in the two or more input videos $V_m$ according to:

$$J_{DF}(\hat{x}_i) = \sum\nolimits_{m=1}^{M} \alpha_m \varphi_m \left( \overline{y}_{m,i} - z_{m,i} \right) \qquad (8)$$

According to some embodiments, the processing unit 103 may be configured determine the weighting coefficients $\alpha_m$ with $m \in [1, M]$ from the interval [0,1] such that $\sum_{m=1}^{M} \alpha_m = 1$.

According to some embodiments, the norm function $\varphi_m$ may be any norm defined over a real Hilbert space.

According to some embodiments, the processing unit 103 may be configured to select at least one optimization constraint $Opt_l$ in a group comprising a quantization constraint, a pixel range constraint, and a total variation constraint, the processing unit 103 being configured to extract the optimization parameters associated with each optimization constraint from the video stream $b_m$ associated with each of the input videos $V_m$.

According to some embodiments, a quantization constraint may depend on the optimization parameters comprising the reconstruction levels of the transform coefficients and the quantization intervals associated with the components of the vector of quantization coefficients $z_{m,i}$. For a reconstructed frame $\hat{x}_i$, the quantization constraint may be expressed as:

$$Opt_1: find\ \hat{x}_i \in \Omega\ such\ that\ for\ all\ m = 1, ..., M, \bar{y}_{m,i} \in C_{m,i} \qquad (9)$$

In equation (9), $C_{m,i}$ denotes a closed convex set which may depend on the quantization levels and/or on the quantization intervals considered by the quantization operation performed by the $m^{th}$ quantization unit 132-$m$. The quantization constraint formulated in equation (9) imposes an admissibility condition to each of the reconstructed frames.

According to some embodiments, the pixel range constraint may define the values to which should belong the pixels comprised in each reconstructed frame. For a reconstructed frame $\hat{x}_i$, the pixel range constraint may be expressed according to:

$$Opt_2: find\ \hat{x}_i \in \Omega\ such\ that\ x_{i,min} \leq \hat{x}_i \leq x_{i,max} \qquad (10)$$

In equation (10), $x_{i,min}$ denotes a first pixel value and $x_{i,max}$ denotes a second pixel value, both defining the bound limits on the pixels comprised in each reconstructed frame.

According to some embodiments, the total variation constraint may be adopted to enforce the smoothness of the reconstructed frames by limiting the discontinuities to a given metric referred to as a smoothness parameter. The total variation constraint may be advantageously used to deal with noise and artifacts introduced at the compression stage. For a reconstructed frame $\hat{x}_i$, the total variation constraint may be expressed according to:

$$Opt_3: find\ \hat{x}_i \in \Omega\ such\ that\ TV(\hat{x}_i) \leq \eta_i \qquad (11)$$

In equation (11), $\eta_i$ denotes a smoothness parameters associated with the $i^{th}$ reconstructed frame and $TV(.)$ refers to a total variation function. An example of computation of the total variation function is disclosed in 'P. Combettes and J-C. Pesquet, Image Restoration Subject to a Total Variation Constraint, IEEE Transactions on Image Processing, vol. 13, no. 9, September 2004'.

According to some embodiments, the processing unit 103 may be configured to select at least one optimization parameter from a group comprising frame reconstruction levels, the quantization intervals, the quantization levels, a first pixel value $x_{i,min}$, a second pixel value $x_{i,max}$, and a smoothness threshold $\eta_i$. The processing unit 103 may be configured to extract the optimization parameters from the video stream $b_m$ associated with each of the input videos $V_m$.

According to some embodiments, the processing unit 103 may be configured to determine a smoothness threshold $\eta_i$ in association with the reconstructed frame $\hat{x}_i$ depending on a frame reconstruction stopping criterion or from video data bases.

The video reconstruction device 10 may be implemented in any video coding system for determining one or more reconstructed videos from multiple compressed video streams association with multiple input videos representing a single source video. The determined one or more reconstructed videos may be used for storage, processing, or display.

Advantageously, the video reconstruction device 10 may be implemented in any scalable video coding systems in general, and in scalable hybrid coding systems in particular.

Scalable video coding provides a mechanism for coding video in multiple layers, where each layer (also referred to 'spatial layer') represents a different quality/resolution/rate representation of a same source video. The multiple layers may comprise a base layer and one or more enhancement layers. The base layer corresponds to the lowest quality representation. Each enhancement layer may be coded by referencing lower layers and may provide improved video quality.

Decoding a sub-set of layers of a scalable coded video stream results in a video with a lower but still acceptable quality than would result if the full video stream were decoded.

Examples of types of scalability supported for example in the SHVC standard comprise temporal scalability, quality scalability (also referred to as 'signal-to-noise ratio scalability' as the signal-to-noise ratio is used as an estimate of the quality of a signal, in particular the peak SNR is used as the SNR measure), spatial scalability, region-of-interest scalability in which individual rectangular regions of the video can be improved in an enhancement layer, bit depth scalability, and color gamut scalability.

Temporal scalability enables a scalable video stream to be extracted at different frame rates.

Quality scalability allows each layer to be coded using different quantization parameters to tweak the video quality at each layer. Quality scalability varies the level of detail of fidelity of the video by using different compression levels.

Spatial scalability allows each layer to be coded with different frame resolutions. The spatial scalability is achieved by reducing the spatial resolution of the video.

In a scalable video codec (scalable video encoder or scalable video decoder), each spatial layer may implement the basic structure of a video codec (video encoder or video decoder) for removing the temporal, spatial, and statistical redundancy in the video data.

In a hybrid scalable video codec (hybrid scalable video encoder or hybrid scalable video decoder) may further implement additional inter-layer prediction mechanisms for exploiting the redundancy between the different spatial layers.

The inter-layer prediction mechanisms may advantageously improve the coding efficiency of the enhancement layers. These prediction mechanisms may be switchable; so that an enhancement layer encoder can choose which lower layer information should be exploited for an efficient enhancement layer coding. Exemplary inter-layer prediction mechanisms comprise inter-layer motion prediction and residual prediction.

Inter-layer motion prediction may be used to employ lower layer motion data for spatial enhancement layer coding.

Residual prediction may be used to exploit the correlation of the transform coefficients between the adjacent layers.

In an application of the invention to hybrid scalable video coding systems, the video reconstruction device 10 may be implemented in a hybrid scalable coding system comprising a base layer and one or more enhancement layers as an inter-layer optimization block. The video reconstruction device 10 may be configured to determine one or more reconstructed videos by combining the video data determined by the base layer and the enhancement layers, the input videos representing a source video corresponding to the different video encoded/decoded by the different layers of the hybrid scalable video coding system. The determined one or more reconstructed videos may be used during the inter-layer prediction process or may be stored or displayed.

In an application to a scalable video codec comprising a scalable video encoder configured to determine a scalable video stream by multi-layer encoding of a source video and a scalable video decoder configured to determine one or more decoded videos by decoding one or more sub-streams comprised in the scalable video stream, the video reconstruction device 10 may be implemented in both the scalable video encoder and the scalable video decoder.

In other embodiments, the video reconstruction device 10 may be implemented in one of the scalable video encoder and the scalable video decoder.

In some embodiments, the video reconstruction device 10 may be implemented in a scalable video encoder, the scalable video encoder comprising $M \geq 2$ (two or more) layers, each layer implementing a video encoder configured to receive an input video $V_m$ derived from a source video $V$ and to determine a video stream $b_m$ by encoding the received input video. The scalable video encoder may be configured to determine a single scalable video stream $b$ from the video streams $b_m$, $m = 1, ..., M$ determined by the different layers and from which two or more video streams of different resolutions/qualities/rates can be extracted individually. The video reconstruction device 10 may be configured to determine one or more reconstructed videos $V$ according to the optimization of a video reconstruction function $J_{DF}(V)$ in the presence of at least one optimization constraint, the video reconstruction function $J_{DF}(V)$ being dependent on a combination of the video streams $b_m$, for $m = 1, ..., M$, associated with the two or more input videos $V_m$ (equivalently associated with the two or more layers). The at least one optimization constraint may be dependent on one or more optimization parameters related to the two or more input videos $V_m$ and being extracted from the video streams $b_m$ determined by the two or more layers comprised in the scalable video encoder in association with the two or more input videos $V_m$ of, for $m = 1, ..., M$. The determination of one or more reconstructed videos from the video data associated with the multiple layers of a scalable video encoder may be performed according to any of the preceding features described above with reference to figure 1.

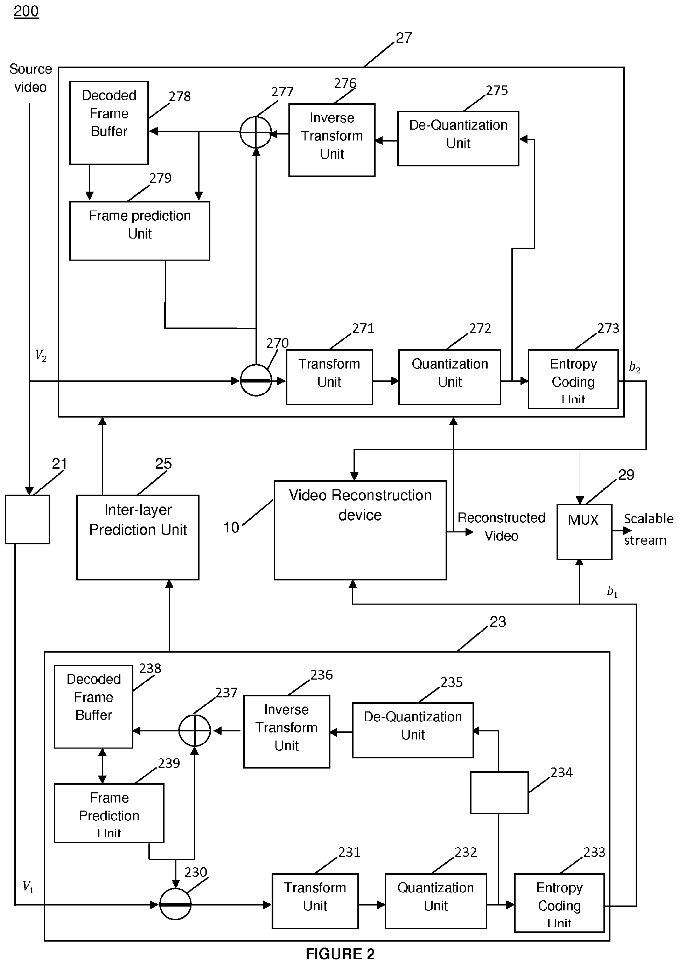

Figure 2 is a block diagram illustrating an exemplary implementation of the video reconstruction device 10 for determining one or more reconstructed videos in a hybrid scalable video encoder 200 comprising two layers: a base layer 23 and an enhancement layer 27.

The hybrid scalable video encoder 200 may comprise a pre-processor 21 configured to receive a source video and to determine an input video in association with each layer comprised therein by applying one or more pre-processing operations to said source video. The pre-processing operations may comprise down-sampling, trimming, rate conversion, geometrical format conversion, color format conversion, color correction, de-noising filtering, and low-pass filtering. The pre-processor 21 may be configured to determine an input video $V_1$ sent to the base layer 23 and an input video $V_2$ sent to the enhancement layer 27.

Each of the base layer 23 and the enhancement layer 27 may implement a hybrid video encoder according to any of the preceding features related to the video encoder 13-$m$ described with reference to figure 1 for determining a video stream from a received input video.

The hybrid scalable video encoder 200 may further comprise an inter-layer prediction unit 25 configured to perform one or more inter-layer prediction mechanisms given video data received from the base layer 23 and to send the inter-layer prediction signals to the enhancement layer 27, the enhancement layer 27 being configured to use the inter-layer prediction signals for improving the coding efficiency.

The hybrid scalable video encoder 200 may comprise a video reconstruction device 10 configured to receive the video streams $b_1$ from the base layer and $b_2$ from the enhancement layer and to determine one or more reconstructed videos according to the optimization of a video reconstruction function according to any of the preceding features on video reconstruction described with reference to figure 1.

According to some embodiments, the video reconstruction device 10 may be configured to send one or more of the reconstructed videos to the enhancement layer 27. In particular to the video reconstruction device 10 may be configured to send one or more of the reconstructed videos to the decoded frame buffer 278 comprised in the enhancement layer 27 either for short-term storage for example if one or more of the frames comprised in one or more of the reconstructed videos is to be used for frame prediction, or for long-term storage for example if one or more of the reconstructed videos is to be displayed or further processed.

The hybrid scalable video encoder 200 may further comprise a multiplexing unit 29 configured to determine a single scalable video stream $b$ by multiplexing the video streams determined individually by the different layers, namely by multiplexing the video stream $b_1$ determined by the base layer 23 and the video stream $b_2$ determined by the enhancement layer 27.

In some embodiments, the video reconstruction device 10 may be implemented in a scalable video decoder, the scalable video decoder comprising $M \geq 2$ (two or more) layers, each layer implementing a video decoder configured to receive an input video stream $b_m$ derived from a scalable video stream $b$ representing a source video $V$ and to determine a decoded video $V_m$ by decoding the input video stream $b_m$. The decoded videos determined by the different layers may have different qualities/resolutions. The video reconstruction device 10 may be configured to determine one or more reconstructed videos $V$ according to the optimization of a video reconstruction function $J_{DF}(V)$ in the presence of at least one optimization constraint, the video reconstruction function $J_{DF}(V)$ being dependent on a combination of the decoded videos determined by the two or more layers. The at least one optimization constraint may be dependent on one or more optimization parameters related to the two or more decoded videos $V_m$ and extracted from input video streams $b_m$ associated with each decoded video. The determination of one or more reconstructed videos from the input video streams $b_m$ associated with the decoded videos determined by the multiple layers of a scalable video decoder may be performed according to any of the preceding features described above with reference to figure 1.

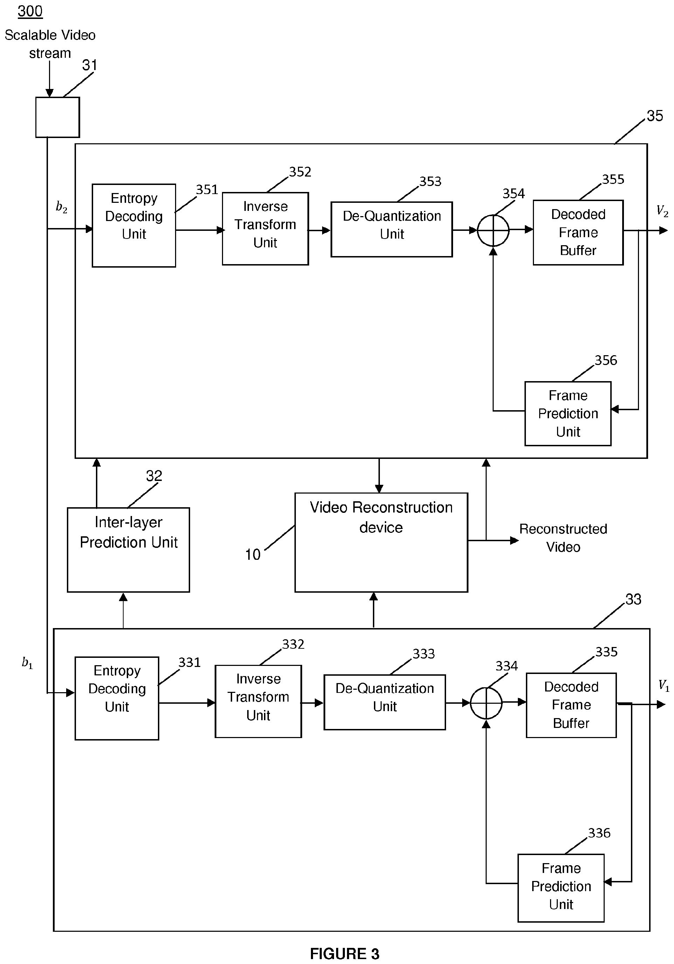

Figure 3 is a block diagram illustrating an exemplary implementation of the video reconstruction device 10 for determining one or more reconstructed videos in a hybrid scalable video decoder 300 comprising two layers: a base layer 33 and an enhancement layer 35.

The hybrid scalable video decoder 200 may comprise a pre-processor 31 configured to receive a scalable video stream $b$ encoded by a scalable video encoder and to determine an input video stream $b_m$ in association with each layer comprised therein by de-multiplexing the received scalable video stream $b$. The pre-processor 31 may be configured to determine an input video stream $b_1$ sent to the base layer 33 and an input video stream $b_2$ sent to the enhancement layer 35.

Each of the base layer 33 and the enhancement layer 37 may implement a hybrid video decoder for determining a decoded video $V_m$ from the received input video stream $b_m$. In each hybrid video decoder, the inverse operations, including entropy decoding, de-quantization and inverse transform, as well as prediction signal reconstruction may be performed to determine a decoded video.

Accordingly, the base layer 33 (respectively the enhancement layer 37) may comprise:

- an entropy decoding unit 331 (respectively 351) configured to receive the video stream $b_m$ and to determine an estimate on transformed and quantized signals;

- an inverse transform unit 332 (respectively 352) configured to determine an estimate on quantized signals by applying the inverse of the transform operation performed by the transform unit comprised in the scalable video encoder encoding in which the scalable video stream was encoded;

- a de-quantization unit 333 (respectively 353) configured to determine a reconstructed prediction error signal by applying the inverse of the quantization operation performed by the quantization unit comprised in the scalable video encoder in which the scalable video stream was encoded;

- a decoded frame buffer 335 (respectively 355) configured to store decoded frames for final usage (for example for display of storage) or for prediction in embodiments using a predictive coding scheme;

- a prediction unit 336 (respectively 356) configured to determine a prediction for each frame according to one or more of the preceding embodiments on frame prediction;

- a calculation unit 334 (respectively 354) configured to add the reconstructed prediction error signal with the available prediction determined by the frame prediction unit 336 (respectively 356).

The hybrid scalable video decoder 300 may further comprise an inter-layer prediction unit 32 configured to perform one or more inter-layer prediction mechanisms given video data received from the base layer 33 and to send the inter-layer prediction signals to the enhancement layer 35, the enhancement layer 35 being configured to use the inter-layer prediction signals for improving the decoding efficiency.

In an application of the invention to scalable video decoding, the hybrid scalable video decoder 300 may comprise a video reconstruction device 10 configured to receive the decoded videos $V_1$ from the base layer 33 and the decoded video $V_2$ from the enhancement layer 35 and to determine one or more reconstructed videos according to the optimization of a video reconstruction function according to any of the preceding features on video reconstruction described with reference to figure 1.

According to some embodiments, the video reconstruction device 10 may be configured to send one or more of the reconstructed videos to the enhancement layer 35. In particular to the video reconstruction device 10 may be configured to send one or more of the reconstructed videos to the decoded frame buffer 355 comprised in the enhancement layer 35 either for short-term storage for example if one or more of the frames comprised in one or more of the reconstructed videos is to be used for frame prediction, or for long-term storage for example if one or more of the reconstructed videos is to be displayed as a final video.

The video reconstruction device 10 may be also implemented in multi-view coding systems.

Multi-view coding is a stereoscopic video coding standard that provides mechanisms for efficient encoding of video sequences captured simultaneously from multiple camera angles in a single video stream. Multi-view coding relies on the inter-dependencies between the video recordings of a same scene captured from multiple angles. Multi-view coding can be used in several applications comprising for example the production of special effects.

Similarly to a scalable video codec, a multi-view codec has a hierarchical structure comprising two or more spatial layers referred to as 'spatial views' or 'views'. The views may comprise a base view and one or more dependent views.

In a multi-view codec (multi-view encoder or multi-view decoder), each view may implement the basic structure of a video codec (video encoder or video decoder) for removing the temporal, spatial, and statistical redundancy in the video data.

In addition to the exploitation of the spatial, temporal, and statistical redundancies on multi-view data, multi-view coding allows exploiting inter-view redundancy resulting from the inter-view statistical dependencies between the videos captured from different angles since all cameras (i.e. all views) capture the same scene from different view-points.

A multi-view codec may further implement additional inter-view prediction structures for exploiting the correlations between the different spatial views. The combination of temporal, spatial, statistical, and inter-view prediction can be thus used for efficient encoding.

The inter-view prediction structures may advantageously improve the coding efficiency of the dependent views. Exemplary inter-view prediction structures comprise motion-compensated prediction structures, disparity-compensated prediction structures, and hybrid motion-and-disparity compensated prediction structures.

In an application of the invention to a multi-view coding system, the video reconstruction device 10 may be implemented in a multi-view coding system comprising a base view and one or more dependent views as an inter-view optimization block. The video reconstruction device 10 may be configured to determine one or more reconstructed videos by combining the video data associated with the base view and the dependent view(s). The determined one or more reconstructed videos may be used during the inter-view prediction process or may be stored or displayed.

In an application of the invention to multi-view coding systems, the video reconstruction device 10 may be, in some embodiments, implemented in both a multi-view encoder and a multi-view decoder implemented in a multi-view coding system.

In other embodiments, the video reconstruction device 10 may be implemented in one of the multi-view encoder and the multi-view decoder.

In some embodiments, the video reconstruction device 10 may be implemented in a multi-view encoder, the multi-view encoder comprising $M \geq 2$ (two or more) spatial views, each view implementing a video encoder configured to receive an input video $V_m$ representing a view of a video scene and to determine a video stream $b_m$ by encoding the received input video. The multi-view encoder may be configured to determine a single video stream $b$ from the video streams $b_m$, $m = 1, ..., M$ determined by the different views. The video reconstruction device 10 may be configured to determine one or more reconstructed videos $V$ according to the optimization of a video reconstruction function $J_{DF}(V)$ in the presence of at least one optimization constraint, the video reconstruction function $J_{DF}(V)$ being dependent on a combination of the video streams $b_m$, for $m = 1, ..., M$, associated with the two or more input videos $V_m$ (equivalently associated with the two or more views). The at least one optimization constraint may be dependent on one or more optimization parameters related to the two or more input videos $V_m$ and being extracted from the video streams $b_m$ determined by the two or more views comprised in the multi-view encoder in association with the two or more input videos $V_m$ of, for $m = 1, ..., M$. The determination of one or more reconstructed videos from the video data associated with the multiple views of a multi-view encoder may be performed according to any of the preceding features described with reference to figure 1.

Figure 4 is a block diagram illustrating an exemplary implementation of the video reconstruction device 10 for determining one or more reconstructed videos in a multi-view encoder 400 comprising two spatial views: a base view 43 and a dependent view 41.

The multi-view encoder 400 may comprise a base view 43 configured to receive an input video $V_1$ and a dependent view 41 configured to receive an input video $V_2$. Each of the base view 43 and the dependent view 41 may implement a hybrid video encoder according to any of the preceding features related to the video encoder 13-m described with reference to figure 1 for determining a video stream from the received input video.

The multi-view encoder 400 may further comprise an inter-view prediction unit 42 configured to perform one or more inter-view prediction mechanisms given video data received from the base view 43 and to send the inter-view prediction signals to the dependent view 41, the dependent view 41 being configured to use the inter-view prediction signals for improving the coding efficiency.

The multi-view encoder 400 may comprise a video reconstruction device 10 configured to receive the video streams $b_1$ from the base view and $b_2$ from the dependent view and to determine one or more reconstructed videos according to the optimization of a video reconstruction function according to any of the preceding features on video reconstruction described with reference to figure 1.

According to some embodiments, the video reconstruction unit 10 may be configured to send one or more of the reconstructed videos to one or more of the dependent views. In particular to the video reconstruction unit 10 may be configured to send one or more of the reconstructed videos to the decoded frame buffer 418 comprised in one or more dependent views 41 either for short-term storage for example if one or more of the frames comprised in one or more of the reconstructed videos is to be used for inter-view prediction, or for long-term storage for example if one or more of the reconstructed videos is to be displayed or further processed.

The multi-view encoder 400 may further comprise a multiplexing unit 45 configured to determine a single video stream $b$ by multiplexing the video streams determined individually by the different spatial views, namely by multiplexing the video stream $b_1$ determined by the base view 43 and the video stream $b_2$ determined by the dependent view 41.

In some embodiments, the video reconstruction device 10 may be implemented in a multi-view decoder, the multi-view decoder comprising $M \geq 2$ (two or more) spatial views, each spatial view implementing a video decoder configured to receive an input video stream $b_m$ derived from a multi-view stream $b$ representing a video scene and to determine a decoded video $V_m$ by decoding the input video stream $b_m$. The decoded videos determined by the different spatial views may have different qualities/resolutions. The video reconstruction device 10 may be configured to determine one or more reconstructed videos $V$ according to the optimization of a video reconstruction function $J_{DF}(V)$ in the presence of at least one optimization constraint, the video reconstruction function $J_{DF}(V)$ being dependent on a combination of the decoded videos determined by the two or more spatial streams. The at least one optimization constraint may be dependent on one or more optimization parameters related to the two or more decoded videos $V_m$ and extracted from input video streams $b_m$ associated with each decoded video. The determination of one or more reconstructed videos from the input video streams $b_m$ associated with the decoded videos determined by the multiple spatial views of a multi-view decoder may be performed according to any of the preceding features described above with reference to figure 1.

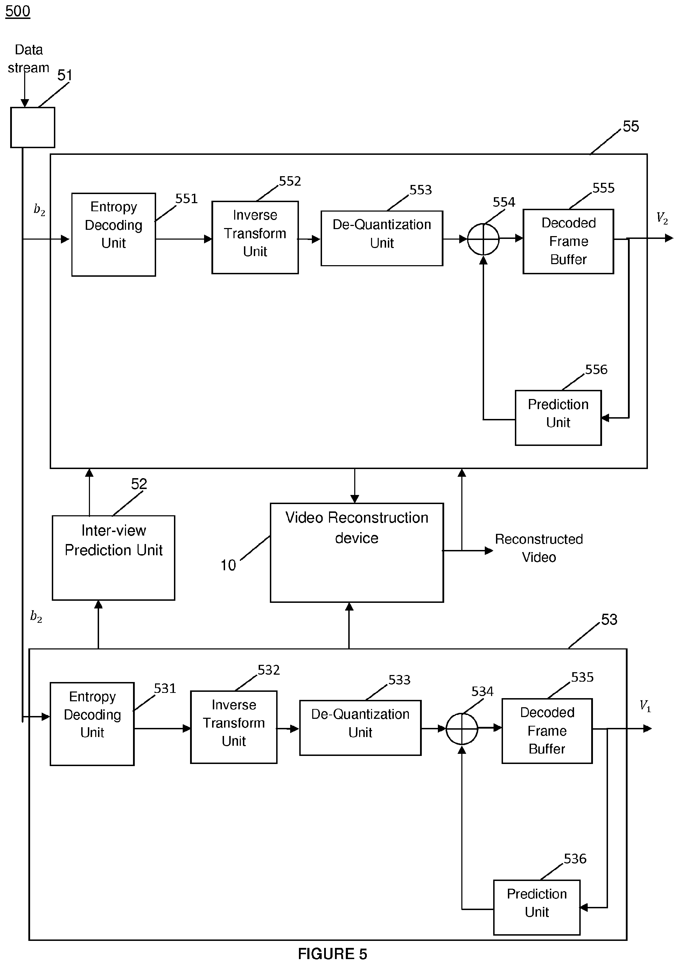

Figure 5 is a block diagram illustrating an exemplary implementation of the video reconstruction device 10 for determining one or more reconstructed videos in a multi-view decoder 500 comprising two spatial views: a base view 53 and a dependent view 55.

The multi-view decoder 500 may comprise a pre-processor 51 configured to receive a multi-view stream $b$ encoded multi-view encoder and to determine an input video stream $b_m$ in association with each spatial view comprised therein by de-multiplexing the received multi-view stream $b$. The pre-processor 51 may be configured to determine an input video stream $b_1$ sent to the base view 53 and an input video stream $b_2$ sent to the dependent view 55.

Each of the base view 53 and the dependent view 55 may implement a hybrid video decoder for determining a decoded video $V_m$ from the received input video stream $b_m$.

The multi-view decoder 500 may further comprise an inter-view prediction unit 52 configured to perform one or more inter-view prediction mechanisms given video data received from the base view 53 and to send the inter-view prediction signals to the dependent view 55, the dependent view 55 being configured to use the inter-view prediction signals for improving the decoding efficiency.

In an application of the invention to multi-view decoding, the multi-view decoder 500 may comprise a video reconstruction device 10 configured to receive the decoded videos $V_1$ from the base view 53 and the decoded video $V_2$ from the dependent view 55 and to determine one or more reconstructed videos according to the optimization of a video reconstruction function according to any of the preceding features on video reconstruction described with reference to figure 1.

According to some embodiments, the video reconstruction device 10 may be configured to send one or more of the reconstructed videos to the dependent view 55. In particular to the video reconstruction device 10 may be configured to send one or more of the reconstructed videos to the decoded frame buffer 555 comprised in the dependent view 55 either for short-term storage for example if one or more of the frames comprised in one or more of the reconstructed videos is to be used for frame prediction, or for long-term storage for example if one or more of the reconstructed videos is to be displayed as a final video.

There is also provided a method for determining one or more reconstructed videos from $M \geq 2$ video streams $b_m$ associated with two or more input videos representing a source video in a video coding system. The two or more input videos may have been encoded based on different encoding configurations. Each input video may comprise a sequence of one or more input frames. Each video stream associated with each input video may comprise data representative of the input video. The video reconstruction method comprises determining one or more reconstructed videos $V$ according to the optimization of a video reconstruction function $J_{DF}(V)$ in the presence of at least one optimization constraint, the video reconstruction function $J_{DF}(V)$ being dependent on a combination of the video streams $b_m$, for $m = 1, ..., M$, associated with the two or more input videos $V_m$, the at least one optimization constraint being dependent on one or more optimization parameters related to the two or more input videos $V_m$ and being extracted from the video streams $b_m$ associated with the two or more input videos $V_m$ for $m = 1, ..., M$.

According to some embodiments, the video reconstruction function may be expressed according to (6) and the optimization of the video reconstruction function may be performed through individual optimizations of frame reconstructions functions as given in equation (5).

There is also provided a computer program product for determining one or more reconstructed videos from $M \geq 2$ video streams $b_m$ associated with two or more input videos representing a source video in a video coding system. The two or more input videos may have been encoded based on different encoding configurations. Each input video may comprise a sequence of one or more input frames. Each video stream associated with each input video may comprise data representative of the input video. The computer program product may comprise:

a non-transitory computer readable storage medium, and instructions stored on the non-transitory computer readable storage medium that, when executed by a processor, casr the processor to determine one or more reconstructed videos $V$ according to the optimization of a video reconstruction function $J_{DF}(V)$ in the presence of at least one optimization constraint, the video reconstruction function $J_{DF}(V)$ being dependent on a combination of the video streams $b_m$, for $m = 1, ..., M$, associated with the two or more input videos $V_m$, the at least one optimization constraint being dependent on one or more optimization parameters related to the two or more input videos $V_m$ and being extracted from the video streams $b_m$ associated with the two or more input videos $V_m$ for $m = 1, ..., M$.

Devices, methods, and computer program products according to the various embodiments of the invention may be implemented in any video coding system used in video processing/transmission/storage devices and systems in application to domestic, civilian, and military video applications.

A video coding system may be implemented in several devices and systems comprising for example cloud computing servers, terminals/user equipments/base stations in radio communication networks, central control rooms, on-site monitors, mobile monitors in vehicles, handheld devices (e.g. laptops, smart-phones, tablets, robots, video players).

Exemplary applications comprise, without limitation:

- video surveillance and security (e.g. home monitoring, environmental monitoring such as pollution monitoring, airport security monitoring, traffic monitoring);

- communication applications such as conversational applications (e.g. social media, video conferencing, remote education) over wired, wireless or optical fiber-based communication networks;

- Video distribution such as video on demand and video broadcasting (e.g. Digital Video Broadcasting (DVB), high definition TV, live broadcast applications like sports events);

- video streaming;

- medical applications (e.g. real-time medical diagnosis, computer-aided diagnosis in medical imaging, study of anatomical structure, intra-surgery navigation, health care domain);

- traffic applications (e.g. automatic vehicle guidance, subways, and highways administrations);

- Video storage and recording (e.g. optical disks like DVD or Blu-ray);

- computer vision-based applications for example in agriculture, augmented reality, autonomous vehicles, and in robotics;

- Virtual reality, etc.

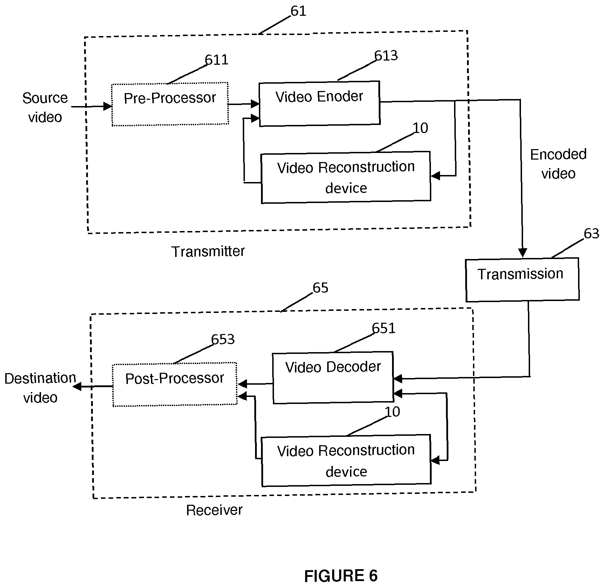

Referring to figure 6, there is illustrated an exemplary application of the invention in a transmission system in which a video content is being transmitted from at least one transmitter 61 to at least one receiver 65 via a video transmission channel 63. The transmission system may comprise a hybrid video coding system according to which the transmitted video content is encoded/decoded using a hybrid video codec.

The video codec consists of two parts: a video encoder 613 and a video decoder 651, the video encoder 613 being configured to transform a source video into an encoded video in the form of a compressed bit stream, and the video decoder 651 being configured to reconstruct the video content from the bit stream received over the video transmission channel 13. In an application to video transmission systems, the video encoder 613 may be implemented in one or more transmitter devices 61 (also referred to as a 'transmitters') configured to transmit the encoded video over the transmission channel 63 and the video decoder 651 may be implemented in one or more receiver devices 65 (also referred to as 'receivers') configured to receive the encoded video in the transmission system.

The transmission system may be wired, wireless (e.g. radio, ad-hoc wireless communications over Local Area Networks or Wide Area Networks, Visible Light communication systems), or optical (e.g. optical fiber-based).

In an exemplary application of the invention to wired transmission systems such as computer networking systems, the transmitter 61 and/or receiver 65 may be any video processing/storage/transmission device configured to operate in a wired network. Exemplary devices in such applications comprise computers connected to a small or large area wired network. The transmission channel 63 may be in this case any type of physical cable used to ensure the transfer of video data between the different connected devices.

In an application of the invention to wireless transmission systems such as ad-hoc wireless networks and radio communication systems, the transmitter 61 and receiver 65 may be any type of fixed or mobile wireless video processing/storage/transmission device configured to operate in a wireless environment. Exemplary devices in such applications comprise laptops, mobile phones, video control monitors. The transmission channel 63 may be in this case any wireless propagation medium. Further, the transmission channel 63 may accommodate several transmitters 61 and/or several receivers 63 for example in video distribution contents applications such as video broadcasting and video conferencing.

In an application of the invention to optical transmission systems such as optical fiber-based systems, the transmitter 61 and/or the receiver 65 may be any optical transceiver devices configured to respectively transmit and receive video data propagated over an optical link. The transmission channel 63 may be any optical fiber link designed to carry video data over short or long distances. Exemplary applications using optical fiber links over short distances comprise high-capacity networks such as data center interconnections. Exemplary applications using optical fiber links over long distances comprise terrestrial and transoceanic transmissions.

According to some embodiments, the encoder 613 may be configured to determine a bit-stream according to the underlying application requirements. For this purpose, the encoder 613 may further comprise a control unit (not shown in figure 1) configured to select video encoding tools/parameters or to determine encoder control actions required to adapt the encoded bit-stream to the application requirements (e.g. the bit-rate for transmission, the video resolution/quality) and/or to the decoder-side buffer requirements.

According to some embodiments related to real-time applications, the control unit may be configured to only use past information of the source video to be encoded to adapt to the bit-stream content.

According to some embodiments related for example to conversational applications with real-time requirements, the control unit may use feedback from the receiver side to the transmitter side to adapt/change the encoding parameters. The control unit may further use such feedback for example for loss protection and loss recovery or to request retransmission in case of lost information/video data for example in packet-oriented transmission scenarios.

According to some embodiments, the transmission of the determined bit-stream may be instantaneous or close to real-time, e.g. in video communications or live broadcast scenarios.

In other embodiments, the transmission of the determined bit-stream may be completely decoupled (temporally and/or spatially) e.g. if the video data is to be stored on a Blu-ray disc, DVD, cloud servers, or in streaming applications.

In some embodiments, the transmission of video content between one or more transmitters 61 and one or more receivers 65 may be one-directional.

In other embodiments, the transmission of video content between one or more transmitters 61 and one or more receivers 65 may be bi-directional, e.g. in conversational applications.

In some embodiments for video delivery, the video bit-streams may be multiplexed with coded audio streams and/or subtitles, using various container formats such as AVI, MP4, MKV, etc.

The receiver 65 may be configured to receive the encoded bit-stream over the transmission channel and either to extract the video bit-stream and forward it to the video decoder 651 (for example in real-time applications) or to store the received bit-stream in a buffer. The video decoder 651 configured to determine a destination video from the received bit-stream in the video format indicated by the encoder 613.

If no transmission losses have occurred during the transmission of the bit-stream, the determined destination video at the output of the receiver 65 may exactly match the source video as held available at the one or more transmitters 61.

In case of transmission losses, the determined destination video may constitute an approximation of the original source video. In such cases, error resilience may be required. in such embodiments, the one or more receiver(s) 65 may be configured to apply error concealment strategies to recover the corrupted video sequence as much as possible.

According to some embodiments, the receiver 65 may comprise a post-processor 653 configured to perform operations on the determined destination video for quality enhancement or for adaptation of the destination video to the final usage/user.

The post-processor 653 may be configured to perform operations which may include for example color correction (for example to adapt the destination video to the color format for display), video format adaptation (for example stretching the video to match the display resolution trimming, re-sampling, and special effects determined by the underlying video application.

The determined destination video may be then stored or displayed on a display device such as a screen of a computer, a smart-phone, a computer, etc.

According to some embodiments, the video reconstruction device 10 may be implemented in the transmitter 11 in a device physically independent of the video encoder 613.

In other embodiments, the video reconstruction device 10 may be implemented within the video encoder 613, the video reconstruction device 10 being a part in the chip of the video encoder 613.

According to some embodiments, the video reconstruction device 10 may be implemented in both the transmitter 61 and the receiver 65.

In some embodiments, the video reconstruction device 10 may be implemented only in the transmitter 61 or in the receiver 65. In particular embodiments, the video reconstruction device 10 may be implemented only within the video encoder 613 only or within the video decoder 651.

In embodiments in which the video reconstruction device 10 is implemented in the transmitter 61, the video reconstruction device 10 may be configured to transmit one or more of the reconstructed videos over the transmission channel 63 as the encoded video to be sent to one or more receivers 65.

In some embodiments in which the video reconstruction device 10 is implemented in the receiver 65, the video reconstruction device 10 may be configured to deliver one or more of the reconstructed videos to the post-processor 653 as the destination video to be stored or displayed to users.

While embodiments of the invention have been illustrated by a description of various examples, and while these embodiments have been described in considerable details, it is not the intent of the applicant to restrict or in any way limit the scope of the appended claims to such embodiments. Some of those embodiments may be advantageously combined, when appropriate. Additional advantages and modifications will readily appear to those skilled in the art. The invention in its broader aspects is therefore not limited to the specific details, representative methods, and illustrative examples shown and described.

**Claims**

1. A video reconstruction device (10) for determining one or more reconstructed videos in a video coding system, the video reconstruction device (10) being configured to receive two or more video streams, each video stream being associated with an input video, each input video representing a source video, each input video being encoded by a different video encoder, each video stream comprising data representative of the associated input video, wherein the video reconstruction device (10) comprises a processing unit (103) configured to optimize a video reconstruction function under at least one optimization constraint, which provides said one or more reconstructed videos, said video reconstruction function being dependent on a combination of said video streams, said at least one optimization constraint being dependent on one or more optimization parameters extracted from said video streams.

2. The video reconstruction device (10) of claim 1, wherein each reconstructed video comprises two or more reconstructed frames, the processing unit (103) being configured to optimize said video reconstruction function by optimizing a frame reconstruction function associated with each reconstructed frame comprised in each reconstructed video, a frame reconstruction function associated with a reconstructed frame being optimized over frames selected from a given frame space domain under said at least one optimization constraint.

3. The video reconstruction device (10) of any preceding claim, wherein the video reconstruction device (10) is configured to update one of said at least one optimization constraint according to a performance criterion depending on one or more performance metrics chosen in a group comprising a bit rate, a video resolution, a video quality, and a signal-to-noise ratio prior to the determination of each reconstructed video.

4. The video reconstruction device (10) of any preceding claim, wherein the video reconstruction device (10) comprises a pre-processing unit (101) configured to determine a frame stream from each video stream associated with an input video, an input video comprising two or more input frames, a frame stream being associated with an input frame comprised in an input video, the pre-processing unit (101) being further configured to extract from each frame stream at least a vector of quantization coefficients and a transformed frame in association with each input frame comprised in each of said two or more input videos.

5. The video reconstruction device (10) of claim 4, wherein the processing unit (103) is further configured to:

   - determine a weighting coefficient in association with each input video;
   - determine a distance function in association with each input frame, said distance function being determined by applying a predefined norm function over a given image domain space to a difference between the vector of quantization coefficients and the transformed frame associated with said input frame;
   - determine a weighted distance function in association with each input frame by applying a multiplication operation to the weighting coefficient and the distance function associated with said input frame;
   - determine a frame reconstruction function associated with each reconstructed frame by summing the weighted distance functions associated with input frames over the two or more input videos.

6. The video reconstruction device (10) of any preceding claim 1 to 3, wherein the processing unit (103) is configured to select at least one optimization constraint in a group comprising a quantization constraint, a pixel range constraint, and a total variation constraint, the processing unit (103) being configured to extract the optimization parameters associated with each of said at least one optimization constraint from the video stream associated with each of the input videos.

7. The video reconstruction device (10) of any preceding claim 1 to 2, wherein the processing unit (103) is configured to select at least one optimization parameter in a group comprising frame reconstruction levels, quantization intervals, quantization levels, a first pixel value, a second pixel value, and a smoothness threshold, the processing unit (103) being configured to extract the optimization parameters from the video stream associated with each of the input videos.

8. The video reconstruction device (10) of claim 7, wherein the processing unit (103) is configured to determine said smoothness threshold in association with a reconstructed frame depending on a frame reconstruction stopping criterion or from video databases.

9. A scalable video encoder comprising the video reconstruction device (10) of any preceding claim for determining one or more reconstructed videos, the scalable video encoder comprising two or more layers, each layer implementing a video encoder configured to receive an input video derived from a source video and to determine a video stream by encoding said input video, wherein said video reconstruction function depends on a combination of the video streams determined by the two or more layers comprised in said scalable video encoder.

10. A scalable video decoder comprising the video reconstruction device (10) of any preceding claim 1 to 8 for determining one or more reconstructed videos, the scalable video decoder comprising two or more layers, each layer implementing a video decoder configured to receive an input video stream derived from a scalable video stream representing multiple descriptions of a source video and to determine a decoded video by decoding said input video stream, wherein said video reconstruction function depends on a combination of the decoded videos determined by said two or more layers.

11. The video reconstruction device (10) of claim 9 and/or 10, wherein one or more of the reconstructed videos are used for inter-layer prediction.

12. A multi-view video encoder comprising the video reconstruction device (10) of any preceding claim 1 to 8 for determining one or more reconstructed videos, the multi-view encoder comprising two or more spatial views, each view implementing a video encoder configured to receive an input video representing a view of a video scene and to determine a video stream by encoding the received input video, wherein said video reconstruction function depends on a combination of the video streams determined by said two or more spatial views.

13. A multi-view video decoder comprising the video reconstruction unit (10) of any preceding claim 1 to 8 and 9 for determining one or more reconstructed videos, the multi-view decoder comprising two or more spatial views, each spatial view implementing a video decoder configured to receive an input video stream derived from a multi-view stream representing a view of a video scene and to determine a decoded video by decoding said input video stream, wherein said video reconstruction function depends on a combination of the decoded videos determined by said two or more spatial views.

14. The video reconstruction unit (10) of claim 12 and/or 13, wherein one or more reconstructed videos are used for inter-view prediction.

15. A video reconstruction method for determining one or more reconstructed videos in a video coding system from two or more video streams, each video stream being associated with an input video, each input video representing a source video, each input video being encoded by a different video encoder, each video stream comprising data representative of the associated input video, wherein the video reconstruction method comprises optimizing a video reconstruction function under at least one optimization constraint, which provides said one or more reconstructed videos, said video reconstruction function being dependent on a combination of said video streams, said at least one optimization constraint being dependent on one or more optimization parameters extracted from said video streams.

FIGURE 1

200

FIGURE 2

FIGURE 3

400

FIGURE 4

500

**FIGURE 5**

FIGURE 6

Europäisches
Patentamt

European
Patent Office

Office européen
des brevets

**EUROPEAN SEARCH REPORT**

Application Number

EP 17 30 6724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAETANO RAFFAELE ET AL: "A convex optimization approach for image resolution enhancement from compressed representations", 2013 18TH INTERNATIONAL CONFERENCE ON DIGITAL SIGNAL PROCESSING (DSP), IEEE, 1 July 2013 (2013-07-01), pages 1-8, XP032498558, ISSN: 1546-1874, DOI: 10.1109/ICDSP.2013.6622842 [retrieved on 2013-10-06] | 1-8,15 | INV. H04N19/39 H04N19/85 |
| Y | * sections I-IV * | 9-14 | |
| X | BOYADJIS BENOIT ET AL: "Super-resolution of HEVC videos via convex optimization", 2016 IEEE INTERNATIONAL CONFERENCE ON IMAGE PROCESSING (ICIP), IEEE, 25 September 2016 (2016-09-25), pages 1145-1149, XP033016703, DOI: 10.1109/ICIP.2016.7532537 [retrieved on 2016-08-03] * abstract * * sections 2-4 * | 1,3,4, 6-8,15 | |
| | | | **TECHNICAL FIELDS SEARCHED (IPC)** |
| | | | H04N |
| Y | JILL BOYCE ET AL: "Overview of SHVC: Scalable Extensions of the High Efficiency Video Coding (HEVC) Standard", IEEE TRANSACTIONS ON CIRCUITS AND SYSTEMS FOR VIDEO TECHNOLOGY, 1 January 2015 (2015-01-01), pages 1-1, XP055210971, ISSN: 1051-8215, DOI: 10.1109/TCSVT.2015.2461951 * section III * * figure 1 * | 9-11 | |

-/--

The present search report has been drawn up for all claims

| Place of search | Date of completion of the search | Examiner |
|---|---|---|
| The Hague | 31 May 2018 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | Application Number EP 17 30 6724 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TECH GERHARD ET AL: "Overview of the Multiview and 3D Extensions of High Efficiency Video Coding", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 26, no. 1, 1 January 2016 (2016-01-01), pages 35-49, XP011592175, ISSN: 1051-8215, DOI: 10.1109/TCSVT.2015.2477935 [retrieved on 2016-01-05] * section II * * figure 1 * ----- | 12-14 | |

TECHNICAL FIELDS SEARCHED (IPC)

The present search report has been drawn up for all claims

| Place of search | Date of completion of the search | Examiner |
|---|---|---|
| The Hague | 31 May 2018 | Mayer, Claudia |

page 2 of 2

# EP 3 496 405 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. M. BOYCE, Y. YE ; J. CHEN ; A. K. RAMASUB-RAMONIAN.** Overview of SHVC: Scalable Extensions of the High Efficiency Video Coding standard. *IEEE Transactions on Circuits and Systems for Video Technology,* 2015, vol. 26, 20-34
- **THOMAS WIEGAND ; G. SULLIVAN ; J. REICHEL ; H. SCHWARZ ; M. WIEN.** Joint draft ITU-T rec. h 264 ISO/IEC 14496-10/ amd. 3 scalable video coding. *Joint Video Team (JVT) JVT-X201,* 2007, vol. 108, 1990
- **P. MILANFAR.** Super-Resolution Imaging, Digital Imaging and Computer Vision. Taylor&Francis/CRC Press, 2010
- Performance Evaluation of Multi-Frame Super-Resolution Algorithms. **S. K. NELSON ; A. BHATTI.** International Conference on Digital Image Computing: Techniques and Applications (DICTA). Centre for Intelligent Systems Research, Deakin University, 2012
- **C. LIU ; D. SUN.** On Baysian Adaptive Video Super Resolution. *IEEE Transactions on Pattern Analysis and Machine Intelligence,* vol. 36 (2), 346-360

- **C. A. SEGALL ; A. K. KATSAGGELOS ; R. MOLINA ; J. MATEOS.** Super-Resolution From Compressed Video. Springer, 2002, vol. 11, 211-242
- **B. K. GUNTURK ; Y. ALTUNBASAK ; R. M. MERSEREAU.** Super Resolution Reconstruction of Compressed Video Using Transform-domain statistics. *IEEE Transactions on Image Processing,* January 2004, vol. 13 (1), 33-43
- **C. WANG ; G. YANG ; Y.-P. TAN.** Reconstructing Video From Multiple Compressed Videos. *IEEE Transactions on Circuits and Systems For Video Technology,* September 2009, vol. 19 (9), 1342-1352
- **A. KAPPELER ; S. YOO ; Q. DAI ; A.K. KATSAGGELOS.** Super-Resolution of Compressed Videos Using Convolutional Neuroal Networks. *the proceedings of the IEEE International Conference on Image Processing,* September 2016
- **P. COMBETTES ; J-C. PESQUET.** Image Restoration Subject to a Total Variation Constraint. *IEEE Transactions on Image Processing,* September 2004, vol. 13 (9